(19) Europäisches Patentamt
European Patent Office
Office européen des brevets

(11) **EP 2 237 018 B1**

(12) **EUROPÄISCHE PATENTSCHRIFT**

(45) Veröffentlichungstag und Bekanntmachung des Hinweises auf die Patenterteilung:
**20.03.2013 Patentblatt 2013/12**

(51) Int Cl.:
***G01N 15/06*** *(2006.01)* ***G01N 27/70*** *(2006.01)*

(21) Anmeldenummer: **10158758.2**

(22) Anmeldetag: **31.03.2010**

(54) **Vorrichtung und Verfahren zur Detektion von in einem Gasstrom enthaltenen Partikeln**

Device and method for detecting particles in a gas flow

Dispositif et procédé de détection de particules contenues dans un flux de gaz

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **31.03.2009 DE 202009004253 U**

(43) Veröffentlichungstag der Anmeldung:
**06.10.2010 Patentblatt 2010/40**

(73) Patentinhaber: **Hauser, Andreas**
**52070 Aachen (DE)**

(72) Erfinder: **Hauser, Gerald**
**38678 Clausthal-Zellerfeld (DE)**

(74) Vertreter: **Eisenführ, Speiser & Partner**
**Johannes-Brahms-Platz 1**
**20355 Hamburg (DE)**

(56) Entgegenhaltungen:
**DE-A1- 10 242 301      DE-A1- 19 651 611**
**DE-A1- 19 824 744      DE-A1-102004 007 038**
**DE-A1-102004 039 647   DE-A1-102007 039 566**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 237 018 B1

**Beschreibung**

Die Erfindung betrifft eine Sensorvorrichtung zur Detektion von in einem Gasstrom enthaltenen elektrisch leitenden und/oder elektrisch geladenen Partikeln, insbesondere Rußpartikeln im Abgasstrom eines Dieselmotors, umfassend zumindest eine sich in einer längsrichtung erstreckende erste und eine zweite Elektrodeneinheit, wobei die erste Elektrodeneinheit als Messelektrode ausgebildet ist und in dem Gasstrom angeordnet werden kann.

Ein weiterer Aspekt der Erfindung betrifft ein Verfahren zur Bestimmung von in einem Gasstrom enthaltenen elektrisch leitenden und/oder elektrisch geladenen Partikeln, insbesondere Rußpartikeln im Abgasstrom eines Dieselmotors, umfassend den Schritt: Bereitstellen von zumindest einer sich in einer Längsrichtung erstreckenden ersten und einer zweiten Elektrodeneinheit, wobei vorzugsweise zumindest die erste Elektrodeneinheit in dem Gasstrom angeordnet werden kann.

Sensorvorrichtungen und Verfahren zur Detektion von In einem Gasstrom enthaltenen elektrisch leitenden und/oder elektrisch geladenen Partikeln der eingangs genannten Art dienen dazu, beispielsweise Rußpartikel im Abgasstrom eines Dieselmotors zu detektieren, d.h. quantitativ zu bestimmen. Mit dieser quantitativen Detektion von in einem Gasstrom enthaltenen elektrisch leitenden und/oder elektrisch geladenen Partikeln lässt sich die Partikelladung bzw. -konzentration eines Gasstroms ermitteln. Entsprechende Sensorvorrichtungen werden daher auch als Rußladungssensoren bezeichnet.

Sensorvorrichtungen und Verfahren zur Bestimmung der Temperatur eines Gasstroms der eingangs genannten Art dienen dazu, die - häufig schwankende - Temperatur eines Gasstroms zu ermitteln.

Die DE 195 36 705 A1 zeigt ein Verfahren und eine Vorrichtung zur quantitativen Bestimmung von Rußpartikeln in einem Abgasstrom mit einer Mantel- und einer Innenelektrode. Zwischen diesen Elektroden wird ein elektrisches Feld erzeugt, das, wenn es von einem Gasstrom mit elektrisch leitenden oder geladenen Partikeln durchströmt wird, beeinflusst wird. Die Spannung zwischen den beiden Elektroden wird durch eine geeignete Regelvorrichtung konstant gehalten, so dass ein Ladestrom zwischen den Elektroden und der Spannungsquelle fließen muss. Über diesen Ladestrom wird auf die Menge der im Gasstrom enthaltenen Partikel geschlossen.

DE 19817 402 C1 offenbart eine Sensoranordnung zur quantitativen Bestimmung von in einem Gasstrom enthaltenen Partikeln mit einer vom Gasstrom in einer Abgasleitung umströmen Elektrodenanordnung, der eine Spannung einer Spannungsquelle Über wenigstens eine durch eine Wand der Abgasleitung hindurchragende leiteranordnung zuführbar ist, und mit einer Strommesseinrichtung zur Messung eines von der Spannungsquelle zur Elektrodenanordnung fließenden Stroms. Bei dieser Sensoranordnung wird die Ausbildung einer gegebenenfalls einen Kurzschluss verursachenden durchgehenden Partikelschicht dadurch verhindert, dass wenigstens ein Abschnitt der Oberflächangröße der in die Abgasleitung ragenden Leiteranordnung auf eine die Partikel thermisch zerstörende Temperatur aufheizbar ist

In der DE 10 2004 039 647 A1 ist einen Rußladungssensor mit einem von einem Abgasstrom durchströmten Messkondensator offenbart, bei dem das Messsignal durch einen Ladungsverstärker mit Gleichspannungskopplung verarbeitet wird. Weiterhin sieht dieser Rußladungssensor eine dritte Elektrode vor, die als Korona-Elektrode die Partikel auflädt.

Die DE 10 2005 016 395 A1 zeigt einen Rußladungssensor, der die Partikelladung über einen an seiner Oberfläche nicht isolierten Messwiderstand ermittelt. Die an der Oberfläche des Messwiderstands abgelagerten Partikel bewirken eine Widerstandsänderung entsprechend der Ablagerungsmenge.

DE 196 51 611 A1, DE 10 2004 010 661 B4, DE 102 42 301 A1, DE 10 2004 007 038 A1 und US 7,275,415 B2 beschreiben Sensoranordnungen mit zwei in Strömungsrichtung hintereinander angeordneten Sensorvorrichtungen. Nachteilig an diesen Sensoranordnungen ist jedoch insbesondere deren komplexer Aufbau.

Die DE 20 2005 008 774 U1 zeigt eine Sensoranordnung zur Ermittlung der Strömungsgeschwindigkeit eines Fluids. Die DE 10 2005 039 915 A1 zeigt einen elektrostatischen Partikelsensor, bei dem der Spannungsquelle ein vom Gasdurchsatz abhängiges Potential aufgeprägt ist.

Mit den existierenden Lösungen ist zwar eine quantitativen Detektion von in einem Gasstrom enthaltenen elektrisch leitenden und/oder elektrisch geladenen Partikeln möglich. Allerdings sind Messgenauigkeit, -empfindlichkeit und/oder -geschwindigkeit existierender Vorrichtungen und Verfahren weiter zu verbessern. Weiterhin besteht ein Bedarf dahingehend, die Auswertbarkeit des Sensorsignals zu erhöhen und/oder effizienter zu gestalten bzw. den Informationsgehalt des Sensorsignals hinsichtlich des Gasstroms und seiner Eigenschaften zu erhöhen. Ferner ist auch die Ermittlung der Temperatur und/oder des Massenstroms des Gasstroms zu ermöglichen bzw. zu verbessern.

Der Erfindung liegt daher die Aufgabe zugrunde, einen oder mehrere der genannten Nachteile zu beseitigen oder zumindest zu verringern und/oder einen oder mehrere der genannten Bedarfe zumindest teilweise zu erfüllen.

Diese Aufgabe wird erfindungsgemäß durch eine Sensorvorrichtung zur Detektion von in einem Gasstrom enthaltenen elektrisch leitenden und/oder elektrisch geladenen Partikeln der eingangs genannten Art gelöst, bei der zumindest eine der Elektrodeneinheiten, vorzugsweise die erste Elektrodeneinheit oder beide Elektrodeneinheiten, für ein sich in Erstreckungsrichtung entlang der Elektrodeneinheit bewegendes Partikel zumindest zwei, vorzugsweise mehrere, diskrete Erfassungsbereiche zum Erfassen eines Partikels aufweist, die entlang der Erstreckungsrichtung der Elektrodeneinheit voneinander beabstandet sind, und die erste Elektrodeneinheit einen Ausgang zu einem Messverstärker aufweist, wobei In einem Eingangsbereich des Messverstärkers galvanisch getrennte Wechselströme gefiltert werden können.

Die erste Elektrodeneinheit ist dabei vorzugsweise als Messelektrode ausgebildet, die zweite Elektrodeneinheit vorzugsweise als Hochspannungselektrode.

Die Erstreckungsrichtung der Elektrodeneinheit ist dabei die Längsrichtung, in der sich die Elektrodeneinheit erstreckt und entlang welcher die Erfassungsbereiche beabstandet voneinander angeordnet sind. Die Abmessungen der Elektrodeneinheit in ihrer Längs- bzw. Erstreckungsrichtung der Elektrodeneinheit können größer sein als die in ihrer Querrichtung. Je nach Ausgestaltung der Elektrodeneinheit können ihre Abmessungen in Langs- bzw. Erstreckungsrichtung jedoch auch kleiner oder gleich sein mit denen in ihrer Querrichtung.

Es hat sich bei verschiedenen Sensorausfohrungen zur Detektion von in einem Gasstrom enthaltenen elektrisch leitenden und/oder elektrisch geladenen Partikeln überraschend herausgestellt, dass durch die Ausbildung einer oder beider Elektrodeneinheit/-en mit diskreten Erfassungsbereichen das Messsignal erheblich verstärkt und sowohl Messempfindlichkeit als auch Messgeschwindigkeit deutlich erhöht werden können. Durch die erfindungsgemäße Ausbildung einer oder beider Elektrodeneinheit/en mit diskreten Erfassungsbereichen wird eine Strukturierung der Elektrodeneinheiten erreicht, wodurch das elektrische Feld Verzerrungen aufweist. Damit können insgesamt die Messgenauigkeit und Messqualität des Sensors deutlich verbessert werden.

Erfindungsgemäße Sensorvorrichtungen sind sowohl als Werkstattmessgeräte als auch für die sogenannte "On-bord-Diagnose" für Fahrzeuge einsetzbar. Werkstattmessgeräte sin stationär in einer Werkstatt oder Prüfeinrichtung (beispielsweise TÜV) zur Anwendung kommende Sensoren bzw. Messanordnungen. Für die "On-bord-Diagnose" für Fahrzeuge werden Sensoren oder Messanordnungen eingesetzt, die in bzw. an Kraftfahrzeugen montiert sind, um Messungen während des mobilen Einsatzes der Kraftfahrzeuge durchzuführen (sog. On-Board-Units, OBUs).

Die erfindungsgemäße Sensorvorrichtung ist nicht nur zur Detektion von in einem Gasstrom enthaltenen elektrisch leitenden und/oder elektrisch geladenen Partikeln geeignet, sondern auch zur Detektion von In einem Gasstrom enthaltenen elektrostatisch aufladbaren Partikeln.

Ein diskreter Erfassungsbereich ist definiert als ein Teil einer Elektrodeneinheit, der ausgebildet ist, zumindest einen Messwert zu erfassen. Die Erfassung von Partikeln kann auch als Detektion von Partikeln bezeichnet werden.

Zur Ausbildung der diskreten Erfassungsbereiche ist bzw. sind die erste und/oder die zweite Elektrodeneinheit vorzugsweise zumindest abschnittsweise als Wellrohr, Platte, Plattenabschnitt ausgebildet oder als Spirale oder Wicklung, beispielsweise auf einem isolierenden Rohr, angeordnet. Besonders bevorzugt ist beispielsweise eine koaxiale Ausführung von Hochspannungs- und Messelektrode, oder eine Ausführung als Plattenkondensator.

Besonders bevorzugt ist es, zumindest eine Elektrodeneinheit als Flächengitterelektrode mit dünnen Drähten als diskreten Erfassungsbereichen auszubilden, vorzugsweise als Flächengitterelektrode mit Wolframdrähten mit einem Durchmesser von ca. $25\mu m$ und ca. 1 mm Drahtabstand. Eine solche Elektrode wird auch als Drahtgitterelektrode bezeichnet. Es wurde erkannt, dass sich an solchen Drähten Partikel schlechter ablagern können als an Drähten mit größerem Durchmesser. Dies trägt dazu bei, das Zeitverhalten der Sensorvorrichtung zu verbessern, da Partikelablagerungen zu Zeitverzögerungen im Messsignal führen können. Insbesondere wird die Messgeschwindigkeit verbessert, da die Zeit, bis ein verwertbares Messsignal vorliegt, bei einer Flächengitterelektrode wesentlich geringer ist.

Der Benutzung einer Drahtgitterelektrode anstelle einer herkömmlichen, insbesondere einer flächenförmig ausgebildeten, Elektrode liegt eine überraschende Erkenntnis in Bezug auf die Erzeugung des Messsignals zugrunde: Die bisher vorherrschende Theorie geht davon aus, dass das Messsignal durch einen direkten Ladungstransport durch zwischen den beiden Elektrodeneinheiten, vorzugsweise der Hochspannungselektrode und Messelektrode, hin- und herspringende Partikel erzeugt wird. Dies ist jedoch wenn überhaupt nur bei äußerst geringen Gasgeschwindigkeiten zutreffend. Im bevorzugten Anwendungsgebiet der Partikeldetektion im Abgasstrom von Kraftfahrzeugen sind die Gasgeschwindigkeiten jedoch deutlich höher.

Eine Drahtgitterelektrode verhindert jedoch gerade einen direkten Ladungstransport durch zwischen den beiden Elektrodeneinheiten hin- und herspringende Partikel. Das Messsignal wird demgegenüber jedoch durch die Partikel, die sich als Dipole in einem verzerrten elektrischen Feld bewegen, erzeugt. Durch die erfindungsgemäße, bevorzugte Ausbildung der Sensorvorrichtung mit zumindest einer als Drahtgitterelektrode ausgebildeten Elektrodeneinheit kann diese dielektrophoretische Wirkung direkt erfasst werden, wodurch die Qualität des Messsignals weiter verbessert wird.

Ein weiterer Vorteil der Ausbildung der als Messelektrode dienenden Elektrodeneinheit als Drahtgitterelektrode in Kombination mit einer als Hochspannungselektrode dienenden Elektrodeneinheit ist es, dass sich die einzelnen Messsignale an der Messelektrode addieren und die Empfindlichkeit der Sensorvorrichtung mit der Signalstärke steigt. Denn im Gegensatz dazu ist das Messsignal bei mehreren einzelnen Messelektroden in Kombination mit einer Hochspannungselektrode sehr schwach.

Es hat sich weiterhin gezeigt, dass auch zur Erfassung der Partikelbewegung nicht notwendigerweise mehrere einzelne Messelektroden verwendet werden müssen, sondern auch die Partikelbewegung mit der erfindungsgemäßen, bevorzugten Ausbildung zumindest einer Elektrodeneinheit, vorzugsweise der Messelektrode, als Drahtgitterelektrode erfasst werden kann. Damit sind auch eine mittlere Partikelgröße und/oder eine Partikelgrößenverteilung und/oder die Gasgeschwindigkeit bestimmbar.

Ein weiterer Vorteil der Drahtgitterelektrode ist es, dass die diskreten Erfassungsbereiche als Drähte ausgebildet und in einer einzigen Drahtgitterelektrode zusammengefasst sind, d.h. die Elektrodeneinheit nur aus der Drahtgitterelektrode besteht. Dadurch ist die Montage deutlich einfacher und der Platzbedarf geringer gegenüber mehreren einzelnen Elektroden und darüber hinaus ist auch nur ein Ladungsverstärker erforderlich. Dies ist insbesondere bei Sensorvorrichtungen für die On-board-Diagnose vorteilhaft, die in bestehende Abgasanlagen von Kraftfahrzeugen zu integrieren sind. Besonders bevorzugt ist es, dass die Drahtgitterelektrode zusätzlich strukturiert ist, d.h. beispielsweise der Abstand zwischen den Drähten in einem ersten Bereich der als Drahtgitterelektrode ausgebildeten Elektrodeneinheit größer ist als in einem zweiten Bereich. Auf diese Weise kann auch mit einer Elektrodeneinheit, die nur eine Drahtgitterelektrode umfasst, zusätzlich die Partikelflugbahn ausgewertet und die Gasgeschwindigkeit bestimmt werden.

Bei einer bevorzugten Ausführung zumindest einer Elektrodeneinheit als heizbare Spirale kann zusätzlich zur Detektion der Partikel über die Partikelladung beispielsweise bei geheizter Elektrodeneinheit der Massenstrom und bei ungeheizter Elektrodeneinheit die Temperatur des Gasstroms ermittelt werden.

Die Erfindung kann bevorzugt dadurch fortgebildet werden, dass die erste Elektrodeneinheit zumindest zwei, vorzugsweise mehrere, Einzelelektroden aufweist.

Die zumindest zwei Einzelelektroden können als zur Detektion von in einem Gasstrom enthaltenen elektrisch leitenden und/oder elektrisch geladenen und/oder elektrostatisch aufladbaren Partikeln üblicherweise verwendete Messelektroden ausgebildet sein. Dies hat den Vorteil, dass die erfindungsgemäßen Eigenschaften - auch die der Fortbildungen- unter Verwendung üblicher Messelektroden als Einzelelektroden erreicht werden können.

Besonders bevorzugt ist es jedoch, die Einzelelektroden einer Elektrodeneinheit so zusammenzufassen, dass sie als eine einzige Elektrode eingesetzt werden können und beispielsweise auch nur einen Ladungsverstärker erfordern. Dies wird in besonders vorteilhafter Weise durch die zuvor beschriebene Ausbildung einer Elektrodeneinheit als Flächengitterelektrode bzw. Drahtgitterelektrode erreicht. Vorzugsweise sind die Einzelelektroden als Drähte, Plattenabschnitte oder andere Leiterstrukturen, die vorzugsweise Wolfram, Titan, Nickel, Platin als Legierungselement oder Beschichtung aufweisen, ausgebildet. Die erfindungsgemäße Ausbildung der diskreten Erfassungsbereiche als Einzelelektroden hat den Vorteil, dass die Messwerte der einzelnen Erfassungsbereiche einfach ermittelt werden können.

Die jeweiligen Einzelelektroden können jeweils in ihrer Längsausrichtung - vorzugsweise je nach Anwendungsschwerpunkt - längs bzw. parallel, schräg oder quer bzw. senkrecht zur Strömungsrichtung angeordnet sein. Eine bevorzugte Anordnung der Einzelelektroden ergibt sich, wenn sich die jeweiligen Einzelelektroden jeweils in ihrer Längsausrichtung zumindest abschnittsweise senkrecht zum Gasstrom erstrecken. Dies ist besonders bevorzugt, wenn die Partikelgeschwindigkeit, -bewegung und/oder -größenverteilung ermittelt werden sollen. Auch eine Kombination unterschiedlicher Anordnungsweisen der Einzelelektroden in ihrer jeweiligen Längsausrichtung ist bevorzugt, beispielsweise um eine Drahtgitterelektrode stabiler auszugestalten. Weiter ist bevorzugt, dass die Einzelelektroden in Strömungsrichtung des Gasstroms voneinander beabstandet sind.

Insbesondere bei laminarer Strömung des Gasstroms ist weiterhin bevorzugt, dass die Einzelelektroden in einer Flucht angeordnet sind und diese Flucht in Richtung des Gasstroms verläuft, d.h. parallel zur Strömungsrichtung des Gasstroms. Bei turbulenter Strömung des Gasstroms kann auch eine andere Verlaufsrichtung der Flucht der Einzelelektroden gewählt werden.

Besonders bevorzugt ist es, wenn als Drähte ausgebildete Einzelelektroden senkrecht zur Abgasrichtung, parallel zueinander und in einem gleichmäßigen Abstand voneinander gespannt sind. Die Flucht der Drähte verläuft bei laminarer Strömung bevorzugt parallel zur Strömungsrichtung des Gasstroms.

Die Erfindung kann fortgebildet werden durch eine Messeinheit, die elektrisch mit den zumindest zwei Elektrodeneinheiten gekoppelt und ausgebildet ist, ein Messsignal zu generieren, und eine Auswerteeinheit, die ausgebildet ist, aus dem Messsignal eine Strömungsgeschwindigkeit der Partikel und/oder eine Größe der Partikel zu bestimmen.

Es hat sich weiterhin überraschend herausgestellt, dass durch die erfindungsgemäße Ausbildung der ersten Elektrodeneinheit als zumindest zwei, vorzugsweise mehrere, Einzelelektroden sowohl die Strömungsgeschwindigkeit der Partikel als auch die Größe der Partikel bestimmbar ist. Dies ist insbesondere von Vorteil, da auf diese Weise die Auswertbarkeit des Sensorsignals bzw. Messsignals erhöht wird. Die zusätzlichen Informationen über den Gasstrom und seine Eigenschaften hinsichtlich Strömungsgeschwindigkeit und/oder Größe der Partikel ermöglicht es beispielsweise, weiterführende Analysen durchzuführen. Weiterhin vorzugsweise ist die Auswerteeinheit ausgebildet, die Form der Partikel zu bestimmen.

Die Strömungsgeschwindigkeit der Partikel entspricht der Strömungs- bzw. Gasgeschwindigkeit des Gasstroms. Die Kenntnis dieser Strömungsgeschwindigkeit ist, neben der quantitativen Bestimmung der Partikel im Gasstrom, beispielsweise erforderlich, um den Massenstrom des Gases, beispielsweise den Abgasmassenstrom eines Dieselmotors, ermitteln zu können. Die Bestimmung der Größe der einzelnen Partikel ist erforderlich, um beispielsweise die Partikelgrößenverteilung im Gasstrom bestimmen zu können. Diese zusätzlichen Informationen sind für die Auswertbarkeit des Sensorsignals und die weitere Verwendung der über den Gasstrom und seine Partikelladung gewonnenen Erkenntnisse von besonderer Bedeutung, beispielsweise hinsichtlich der Bewertung der Rußladung von Abgasen in Bezug ihren Einfluss auf die Umwelt.

Mit der erfindungsgemäßen Fortbildung ist es in vorteilhafter Weise möglich, die Bestimmung der Strömungsgeschwindigkeit und/oder der Größe der Partikel auf der einen und die quantitative Detektion der im Gasstrom enthaltenen Partikel auf der anderen Seite mit einer einzigen Vorrichtung vorzunehmen. In existierenden Lösungen konnten diese zusätzlichen Parameter in der Auswertung des Sensorsignals nur durch extern ermittelte und übertragene Werte berücksichtigt werden. Dazu waren bisher aufwändige und/oder mehrere Vorrichtungen und Verfahren erforderlich. Der für eine weitere Vorrichtung zur Bestimmung der Strömungsgeschwindigkeit und/oder der Größe der Partikel erforderlichen Aufwand hinsichtlich Kosten, Bauraum, Installations- und Wartungsaufwand, sowie der entsprechende zusätzliche Auswerteaufwand etc. kann somit mit der erfindungsgemäßen Lösung vermieden werden.

Die Erfindung kann dadurch fortgebildet werden, dass die Messeinheit ausgebildet ist, um das Messsignal als zumindest eine Folge von differenzierten Einzelpulssignalen zu bilden.

Die Erfindung wird bevorzugt weiterhin dadurch fortgebildet, dass die Messeinheit ausgebildet ist, um die Einzelpulssignale aus Ladungsströmen zu bilden, die durch zumindest ein, vorzugsweise genau ein, an den Einzelelektroden der ersten Elektrodeneinheit vorbeiströmendes Partikel erzeugt werden.

Ein an den Einzelelektroden der ersten Elektrodeneinheit vorbeiströmendes Partikel erzeugt in den jeweiligen Einzelelektroden jeweils einen Impuls. Für jedes an den Einzelelektroden vorbeiströmende Partikel entsteht so eine Impuls- bzw. Pulsfolge, die aus den differenzierten Impulsen bzw. Einzelpulssignalen der einzelnen Einzelelektroden besteht. Dadurch wird eine der Anzahl der Einzelelektroden entsprechende Anzahl von Impulsen bzw. Einzelpulssignalen erzeugt.

Durch die erfindungsgemäße Ausbildung der ersten Elektrodeneinheit als zwei oder mehrere Einzelelektroden wird somit die Verfolgung der Partikel entlang der ersten Elektrodeneinheit, d.h. über die durch die zwei oder mehreren Einzelelektroden gebildete Messstrecke, ermöglicht. Damit wird in vorteilhafter Weise auch die Differenzierung bzw. Auswertung des Messsignals entlang dieser Messstrecke und/oder über die Zeit, die die Partikel benötigen, um diese Messstrecke zu überwinden, möglich.

Die Erfindung kann dadurch fortgebildet werden, dass die Auswerteeinheit ausgebildet ist, um eine Frequenz der Folge von differenzierten Einzelpulssignalen zu bestimmen.

Aus der Abfolge der an den Einzelelektroden erzeugten Einzelpulssignale über die Zeit lässt sich deren Frequenz (f) bestimmen. Dabei ist es bevorzugt, wenn die Abstände (d) zwischen den Einzelelektroden bekannt sind. Insbesondere sind gleichmäßige Abstände zwischen den Einzelelektroden bevorzugt, zumindest abschnittsweise gleichmäßige Abstände, wobei ein Abschnitt beispielsweise eine Gruppe von zwei oder mehreren benachbarten Einzelelektroden umfassen kann.

Die Frequenz (f) der Folge von differenzierten Einzelpulssignalen ist proportional zur Geschwindigkeit (v) des Partikels sowie dem Abstand (d) der Einzelelektroden:

$$f = v / d.$$

Die Erfindung kann dadurch fortgebildet werden, dass die Auswerteeinheit ausgebildet ist, um aus überlagerten Erfassungen einer Vielzahl vorbeiströmender Partikel eine signifikante Frequenz der Folgen von differenzierten Einzelpulssignalen zu bestimmen.

In der Regel besteht das Messsignal nicht nur aus einer Folge von differenzierten Einzelpulssignalen, die durch ein einzelnes vorbeiströmendes Partikel erzeugt wird, sondern aus einer Überlagerung einer Mehrzahl von Folgen von differenzierten Einzelpulssignalen, die von einer Mehrzahl an den Einzelelektroden der ersten Elektrodeneinheit vorbeiströmende Partikel erzeugt werden, so dass ein überlagertes Messsignal bzw. eine überlagerte Messung entsteht.

Auch aus der Vielzahl von durch vorbeiströmende Partikel erzeugten Folgen von differenzierten Einzelpulssignalen kann die Strömungsgeschwindigkeit der Partikel bzw. die Gasgeschwindigkeit weiterhin ermittelt werden. Dies erfolgt vorzugsweise durch Bestimmung der signifikanten Frequenz der überlagerten Impulsfolge mittels einer Frequenzanalyse. Dabei ist es bevorzugt, eine Hochpassfilterung anzuwenden, da in der Regel nur der Hochfrequenz-Anteil des überlagerten Messsignals zur Bestimmung der Gasgeschwindigkeit relevant ist. Diese Hochpassfilterung hat weiterhin den Vorteil, Störsignale wie beispielsweise Netzbrummen oder Plattenschwingungen etc. zu reduzieren bzw. zu beseitigen. Insbesondere bevorzugt ist es, die Hochpassfilterung vor Durchführung der Frequenzanalyse auf das überlagerte Messsignal anzuwenden.

Weiterhin kann das Analyseergebnis in bevorzugter Weise durch eine Autokorrelation des Messsignals verbessert werden. Durch Verfolgen des ersten durch eine analoge Autokorrelation erzeugten Korrelationsmaximums ist es dabei in vorteilhafter Weise möglich, ein kontinuierliches Geschwindigkeitssignal zu erzeugen. Dadurch wird die Auswertbarkeit verbessert und vereinfacht. Die Autokorrelation bietet weiterhin den Vorteil, robust gegenüber Messrauschen zu sein. In besonders bevorzugter Weise wird die Autokorrelation vor der Frequenzanalyse durchgeführt. Das Ergebnis der Frequenzanalyse des Korrelationssignals, d.h. des Messsignals, auf das die Autokorrelation angewendet wurde, ist im Wesentlichen identisch mit dem Ergebnis der Frequenzanalyse des direkten Messsignals, allerdings ist das Rauschen im Ergebnis der Frequenzanalyse des Korrelationssignals im Allgemeinen deutlich reduziert.

Die derart ermittelte signifikante Frequenz des aus Überlagerungen der von einer Vielzahl von Partikeln erzeugten Folgen von differenzierten Einzelpulssignalen ermöglicht somit die Bestimmung der Gasgeschwindigkeit auf eine genaue, kostengünstige, einfache und schnelle Weise.

Die Erfindung wird bevorzugt weiterhin dadurch fortgebildet, dass die Auswerteeinheit ausgebildet ist, um aus überlagerten Erfassungen einer Vielzahl vorbeiströmender Partikel anhand einer Analyse der dadurch erzeugten Folgen von differenzierten Einzelpulssignalen das Messsignal zumindest eines Einzelpartikels zu identifizieren, insbesondere indem eine signifikante Frequenz der Folgen von differenzierten Einzelpulssignalen bestimmt wird.

Erfindungsgemäß ist es bevorzugt, wenn die Vielzahl von überlagerten Messungen auf ein einzelnes, vorzugsweise für die Vielzahl der überlagerten Messungen repräsentatives, Messsignal eines Einzelpartikels reduziert werden kann. Ein solches auf ein Einzelsignal reduziertes überlagertes Messsignal kann ausgewertet werden wie ein Einzelsignal. Auf diese Weise kann die Auswertung überlagerter Messungen einfach und effizient durchgeführt werden.

Die Erfindung wird bevorzugt dadurch fortgebildet, dass die Einzelelektroden in einer Reihe angeordnet sind.

Die erfindungsgemäße Anordnung der Einzelelektroden nebeneinander in einer Reihe stellt eine in der Funktionalität, Herstellung, Bauform sowie in der Auswertung effiziente Anordnung der Einzelelektroden dar.

Die Erfindung kann weiterhin dadurch fortgebildet werden, dass die Auswerteeinheit ausgebildet ist, um die Strömungsgeschwindigkeit zumindest eines Partikels, vorzugsweise mehrerer Partikel, aus einem Abstand zwischen den Einzelelektroden und der Frequenz der Folge/n von differenzierten Einzelpulssignalen zu bestimmen.

Bei einem gleichmäßigen Abstand (d) der Einzelelektroden zueinander lässt sich die Geschwindigkeit (v) eines Partikels bzw. des Gasstroms wie folgt aus der Frequenz bzw. signifikanten Frequenz (f) der Folge/n von differenzierten Einzelpulssignalen berechnen:

$$v = f \cdot d.$$

Mit der erfindungsgemäßen Sensorvorrichtung der bevorzugten Fortbildung ist es in vorteilhafter Weise möglich, nicht nur die Strömungsgeschwindigkeit eines Partikels aus der Frequenz einer Folge von differenzierten Einzelpulssignalen zu bestimmen, sondern auch die Strömungsgeschwindigkeit einer Vielzahl von Partikeln, bzw. die Gasgeschwindigkeit des Gasstroms, aus der signifikanten Frequenz der überlagerten Messungen einer Vielzahl von Folgen von differenzierten Einzelpulssignalen zu bestimmen. Dazu wird neben der Frequenz bzw. signifikanten Frequenz der Abstand der Einzelelektroden voneinander herangezogen.

Die erfindungsgemäße Fortbildung ermöglicht damit in vorteilhafter Weise, mit derselben Vorrichtung sowohl die Partikel im Gasstrom quantitativ zu bestimmen als auch die Geschwindigkeit des Gasstrom zu ermitteln. Dies wird ermöglicht durch die erfindungsgemäße Ausbildung der Elektrodeneinheit als zwei oder mehrere Einzelelektroden, wodurch eine Vielzahl von Folgen differenzierten von Einzelpulssignalen generiert und deren Frequenz bzw. signifikante Frequenz und damit die Geschwindigkeit der vorbeiströmende Partikel ermittelbar wird. Durch die erfindungsgemäße Fortbildung entfällt somit die Notwendigkeit, die Strömungsgeschwindigkeit des Gasstroms mit einer zusätzlichen, von der Sensorvorrichtung zur quantitativen Detektion der Partikel verschiedenen, Sensorvorrichtung zu ermitteln.

Die Erfindung kann dadurch fortgebildet werden, dass die Auswerteeinheit ausgebildet ist, um eine Veränderung des Abstands der Partikel von der ersten Elektrodeneinheit quer zur Erstreckungsrichtung der ersten Elektrodeneinheit und/oder eine Änderung der Stärke des Messsignals eines Partikels zwischen zumindest zwei, vorzugsweise mehreren, der Einzelelektroden zu bestimmen.

Die erfindungsgemäße Fortbildung beruht auf der Erkenntnis, dass die Partikel, wenn sie sich durch das elektrostatische Feld des Sensors bewegen, abgelenkt werden. Wenn die zweite Elektrodeneinheit als Hochspannungselektrode und die erste Elektrodeneinheit als Messelektrode ausgebildet ist, werden die Partikel von der Hochspannungsseite, d.h. von der zweiten Elektrodeneinheit, des Sensors angezogen. Damit vergrößert sich der Abstand der Partikel zur Messelektrode, d.h. der ersten Elektrodeneinheit, während die Partikel an dieser ersten Elektrodeneinheit vorbeiströmen. Mit einem steigenden Abstand zur Messelektrode verringert sich das Messsignal entlang der Messelektrode. Da die Messelektrode als erste Elektrodeneinheit erfindungsgemäß aus zumindest zwei, vorzugsweise mehreren, Einzelelektroden besteht, vergrößert sich der Abstand der Partikel von einer Einzelelektrode zur nächsten Einzelelektrode der ersten Elektrodeneinheit. Damit nimmt auch die Messsignalstärke zwischen den Einzelelektroden der ersten Elektrodeneinheit ab.

Die erfindungsgemäße Fortbildung ermöglicht es somit in vorteilhafter Weise, mit der Verringerung der Stärke des Messsignals bzw. der Vergrößerung des Abstandes der Partikel von der ersten Elektrodeneinheit weitere Parameter zu Eigenschaften des Gasstroms zu erfassen und einer Auswertung zugänglich zu machen. Dazu sind erfindungsgemäß keine weiteren Vorrichtungen oder Verfahren erforderlich, da die Erfassung und Auswertung mit derselben Vorrichtung durchgeführt werden kann, mit der auch die Detektion der im Gasstrom enthaltenen Partikel erfolgt.

Die Erfindung wird bevorzugt dadurch fortgebildet, dass die Einzelelektroden eine erste und eine zweite Gruppe von Einzelelektroden umfassen und die Auswerteeinheit ausgebildet ist, die Signale der ersten Gruppe von Einzelelektroden getrennt von den Signalen der zweiten Gruppe von Einzelelektroden auszuwerten.

Diese erfindungsgemäße Fortbildung ermöglicht es auf vorteilhafte Weise, die Signale der Einzelelektroden differenziert nach der ersten und zweiten Gruppe auswertbar sind. Damit kann der Messbereich der ersten Elektrodeneinheit derart aufgeteilt werden, dass die von den Einzelelektroden generierten Signale zumindest getrennt nach zwei Gruppen erfasst und/oder ausgewertet bzw. weiterverarbeitet werden können. Damit wird es in vorteilhafter Weise insbesondere ermöglicht, eine Veränderung des Signals bzw. der Stärke des Messsignals, zwischen der ersten und der zweiten Gruppe von Einzelelektroden, und somit entlang der ersten Elektrodeneinheit, zu ermitteln. Die Aufteilung der Einzelelektroden ist dabei nicht auf zwei Gruppen beschränkt, sondern kann auch eine Vielzahl von Gruppen umfassen, so dass auch eine Veränderung des Messsignals über die Vielzahl der Gruppen erfasst und/oder ausgewertet bzw. weiterverarbeitet werden kann. Es kann erfindungsgemäß auch jede der Einzelelektroden eine eigene Gruppe darstellen und somit jede der Einzelelektroden differenziert auswertbar sein.

Insbesondere ist es bevorzugt, dass der jeweilige Abstand zwischen den Einzelelektroden einer Gruppe gegenüber dem jeweiligen Abstand zwischen den Einzelelektroden einer oder mehrerer anderer Gruppen systematisch gestaffelt ist und insbesondere linear, logarithmisch oder quadratisch zunimmt.

Diese bevorzugte Anordnung der Einzelelektroden in Gruppen ist nicht auf zwei Gruppen begrenzt, sondern kann auch mehr als zwei Gruppen umfassen.

Die Erfindung kann dadurch fortgebildet werden, dass die Einzelelektroden äquidistant zueinander angeordnet sind.

In dieser Fortbildungsform weisen die Einzelelektroden zu ihren jeweils benachbarten Einzelelektroden jeweils den gleichen Abstand auf. Dies hat den Vorteil, dass eine Auswertung besonders einfach ist, da die Signale der Einzelelektroden jeweils in gleichem Abstand, d.h. äquidistant voneinander erfasst werden. Damit lässt sich beispielsweise die Frequenz der Pulsfolge besonders einfach nach der oben genannten Formel berechnen.

Weiterhin ist auch die Herstellung einer entsprechenden Elektrodeneinheit einfach und kostengünstig möglich.

Eine alternative Fortbildungsform sieht vor, dass die Einzelelektroden der ersten Gruppe einen anderen Abstand in Erstreckungsrichtung der Elektrodeneinheit zueinander aufweisen als die Einzelelektroden der zweiten Gruppe, wobei vorzugsweise die Einzelelektroden der ersten Gruppe benachbart zueinander angeordnet und vorzugsweise die Einzelelektroden der zweiten Gruppe benachbart zueinander angeordnet sind.

Durch den unterschiedlichen Abstand der Einzelelektroden der ersten und zweiten Gruppe entstehen auch entsprechend unterschiedliche Impulsfrequenzen, wenn Partikel an den Einzelelektroden der ersten und zweiten Gruppe vorbeiströmen. Dies erleichtert die Identifikation der zur ersten und zur zweiten Gruppe gehörigen Messsignalanteile und damit die Auswertung des Messsignals nach den Gruppen.

Dabei ist es insbesondere bevorzugt, dass der Abstand der Einzelelektroden der zweiten Gruppe in Erstreckungsrichtung der Elektrodeneinheit zueinander ein Vielfaches, vorzugsweise das Doppelte, des Abstands der Einzelelektroden der ersten Gruppe in Erstreckungsrichtung der Elektrodeneinheit zueinander beträgt.

Mit dieser Fortbildungsform wird in vorteilhafter Weise erreicht, dass die entstehenden Frequenzen aufeinander abgebildet werden, beispielsweise im Sinne einer Naturton- bzw. Oktavreihe. Auf diese Weise kann verhindert werden, dass durch die Oberschwingungen nicht zu viele Frequenzen entstehen, die gegebenenfalls die Analyse erschweren können.

Die Erfindung kann dadurch fortgebildet werden, dass die Auswerteeinheit ausgebildet ist, um die Änderung der Stärke des Messsignals eines Partikels zwischen den Einzelelektroden der ersten Gruppe und den Einzelelektroden der zweiten Gruppe zu bestimmen.

Um die Änderung der Messsignalstärke entlang der Messelektrode, d.h. zwischen den Einzelelektroden der ersten Gruppe und den Einzelelektroden der zweiten Gruppe, zu bestimmen, wird vorzugsweise eine Frequenzanalyse durchgeführt und über die jeweils zu erwartenden Frequenzbereiche der ersten und zweiten Gruppe ein Integral gebildet.

Die erfindungsgemäße Sensorvorrichtung gemäß einer oder mehrerer der zuvor beschriebenen Ausführungsformen wird bevorzugt dadurch fortgebildet, dass die Auswerteeinheit ausgebildet ist, um aus der Änderung der Stärke des Messsignals ein Maß für die Veränderung des Abstands der Partikel von der ersten Elektrodeneinheit abzuleiten. Bewegen sich Partikel durch das elektrostatische Feld des Sensors bzw. der Sensorvorrichtung, so werden diese von der Hochspannungsseite angezogen. Da sich daher der Abstand der Partikel zur Messelektrode stetig vergrößert, verringert sich die Stärke des Messsignals entlang der Messelektrode. Ist daher das Verhältnis der Signalstärke am Anfang der Messelektrode zur Signalstärke am Ende der Messelektrode bekannt, so kann daraus die Veränderung des Abstands der Partikel von der ersten Elektrodeneinheit ermittelt werden.

Die Erfindung kann dadurch fortgebildet werden, dass die Auswerteeinheit ausgebildet ist, um aus der Veränderung des Abstands der Partikel von der ersten Elektrodeneinheit quer zur Erstreckungsrichtung der ersten Elektrodeneinheit und/oder der Änderung der Stärke des Messsignals ein Maß für die Größe der Partikel abzuleiten.

Die Beschleunigung bzw. die Ablenkung eines Partikels in Richtung der Hochspannungselektrode ist abhängig von der Größe der Partikel. Je größer das Verhältnis von Oberfläche zu Masse eines Partikels ist, desto stärker wird es beschleunigt. Aus dem Verhältnis der Signalstärke am Anfang der Messelektrode zu Signalstärke am Ende der Messelektrode und/oder aus der Änderung des Abstands der Partikel vom Anfang der Messelektrode zum Ende der Messelektrode kann somit die Partikelgröße bestimmt werden. Die Amplitude des Messsignals ist dabei Abhängig von der Oberfläche des Partikels.

Diese Fortbildungsform bietet den Vorteil, die Partikelgröße als weiteren Parameter des Gasstroms bzw. seiner Eigenschaften mit derselben Sensorvorrichtung ermitteln zu können. Auf diese Weise kann die Auswertbarkeit des Sensorsignals erhöht werden, ohne den zusätzlichen Aufwand einer zusätzlichen Sensorvorrichtung aufbringen zu müssen. Insbesondere wird mit der erfindungsgemäßen Fortbildung die Angabe einer Größenverteilung im Gasstrom enthaltenen Partikel ermöglicht, was beispielsweise relevant sein kann für die Bestimmung, ob die Partikelbelastung eines Gasstroms bestimmten Umweltnormen genügt oder nicht.

Die Erfindung wird bevorzugt dadurch fortgebildet werden, dass die Auswerteeinheit ausgebildet ist, um aus einem mit dem Verhältnis von Oberflächengröße zu Masse der Partikel korrelierenden Signal ein Maß für die Größe der Partikel abzuleiten.

Aus dem Verhältnis der Oberflächengröße zur Masse eines Partikels kann ein Maß für die Größe des Partikels abgeleitet werden. Je größer die Oberfläche im Verhältnis zu Masse ist, d.h. je kleiner ein Partikel ist, desto stärker wird es beschleunigt. Da diese Partikelbewegung bzw. -beschleunigung somit vom Verhältnis der Oberflächengröße des Partikels zur Masse des Partikels abhängt, korreliert die Veränderung der Messsignalstärke diesem Verhältnis der Oberflächengröße des Partikels zur Masse des Partikels. Wenn sowohl die Masse als auch die Oberflächengröße eines Partikels oder ein Sensorsignal, das mit diesem Verhältnis von Oberflächengröße zu Masse der Partikel korreliert, bekannt sind, kann daraus ein Maß für die Größe des Partikels abgeleitet werden.

Die Erfindung kann dadurch fortgebildet werden, dass die Auswerteeinheit ausgebildet ist, um ein Maß für eine Fraktalität und/oder ein Volumen und/oder eine Form des Partikels abzuleiten. Dabei ist besonders bevorzugt, die Auswerteeinheit ausgebildet ist, um ein mit dem Verhältnis von Oberflächengröße zu Masse eines Partikels korrelierendes Signal mit einem mit einer Oberflächengröße und/oder einer Masse des Partikels korrelierenden Signal zu vergleichen. Weiterhin ist bevorzugt, dass die Auswerteeinheit ausgebildet ist, ein Maß für die Oberflächengröße des Partikels und/oder Masse des Partikels aus der Stärke des Messsignals abzuleiten. Diesen Fortbildungsformen liegt die Erkenntnis zugrunde, dass die Stärke des Messsignals abhängig ist von der Größe der Partikeloberfläche, die Partikelbewegung hingegen vom Verhältnis der Oberflächengröße des Partikels zur Masse des Partikels. Die Partikelbewegung korreliert daher mit der Veränderung der Messsignalstärke. Da beispielsweise Rußpartikel im wesentlichen aus Kohlenstoff bzw. Graphit bestehen, kann die Dichte der Rußpartikel als konstant angesehen werden. Damit kann durch Vergleich der Größe der Partikeloberfläche mit dem Verhältnis von Partikeloberflächengröße zu Partikelmasse bzw. durch Vergleich von Signalen, die mit diesen Parametern korrelieren, auf die Partikelform geschlossen werden. Dies geschieht vorzugsweise in Form der sogenannten Fraktalität, aus der auf das Partikelvolumen geschlossen werden kann.

Dabei ist es insbesondere bevorzugt, wenn das Medium, z.B. das Aerosol, des Gasstroms so verdünnt wird, dass einzelne Partikel in der erfindungsgemäßen Sensorvorrichtung untersucht werden können.

Diese Fortbildungsformen ermöglicht es in vorteilhafter Weise, mit der Fraktalität und/oder dem Volumen und/oder der Form eines Partikels und/oder mehrerer Partikel zusätzliche Informationen über den Gasstrom bzw. seine Eigenschaften mit derselben Sensorvorrichtung zu ermitteln.

Weitere vorteilhafte Ausführungsvarianten der erfindungsgemäßen Vorrichtung ergeben sich durch Kombination der zuvor erörterten bevorzugten Merkmale bzw. Ausführungsformen.

Die Erfindung kann dadurch fortgebildet werden, dass zumindest eine der Elektrodeneinheiten zumindest abschnittsweise, vorzugsweise im Bereich aller Erfassungsbereiche, in ein elektrisch nichtleitendes Material eingebettet ist.

Durch Einbetten der Elektroden in ein elektrisch nichtleitendes Material, wie z.B. Quarzglas, Keramik, etc, kann das Feld durch die dielektrischen Eigenschaften der verwendeten Materialen verstärkt werden. Dadurch kann das Messsignal im Hinblick auf die Signalstärke und im Hinblick auf die Querempfindlichkeit beispielsweise bezüglich ionisierter Gase oder der elektrisch Ladung geladener Partikel verbessert werden. Durch das Einbetten einer oder beider Elektroden, insbesondere der Hochspannungselektrode, in ein isolierendes Material ist es zusätzlich möglich, die Spannung zu erhöhen, da die Isolierung einer Korona und einem Funkenüberschlag entgegenwirkt. Durch diese Spannungserhöhung kann das Messsignal proportional verbessert. Bei der Einbettung ist es weiterhin vorteilhaft, eingebettete/n Messelektrode/n zu beheizen, um Ablagerungen zu verhindern, da insbesondere durch die Ablagerung elektrisch leitender Partikel an der Messelektrode Feldverzerrungen nachteilig reduziert werden und/oder eine Drift des Sensorsignals entstehen und somit die Messqualität negativ beeinträchtigt werden kann.

Die Erfindung kann dadurch fortgebildet werden, dass die Sensorvorrichtung zumindest abschnittsweise, insbesondere zumindest eine oder beide Elektrodeneinheiten zumindest abschnittsweise, vorzugsweise im Bereich aller Erfassungsbereiche, für die oder während der Messung auf eine Temperatur oberhalb der Temperatur des Gasstroms und vorzugsweise unterhalb einer Zerstörungstemperatur der Partikel aufheizbar ist bzw. sind. In einem Abgasstrom eines Kraftfahrzeugs mit einer Temperatur von ca. 200°C und einer Zerstörungstemperatur der Partikel, beispielsweise Rußpartikel, von ca. 400°C ist eine Aufheiztemperatur von ca. 300°C bevorzugt.

Diese Fortbildung beruht auf der Erkenntnis, dass durch die Erwärmung der freizuhaltenden Teile der Sensorvorrichtung oberhalb der Abgastemperatur Ablagerungen verhindert werden können, bevor diese entstehen. Die heißen Oberflächen erzeugen einen Diffusionsstrom der Partikel weg von diesen Flächen. Partikel in der Nähe der Oberfläche diffundieren aufgrund der Hitze schneller, als weiter von der Oberfläche entfernte Partikel, da die Hitze mit zunehmender Entfernung von der Oberfläche abnimmt. Daher bildet sich ein Partikel-Nettostrom, der von den beheizten Oberflächen wegführt. Dieser Effekt wird auch als Thermophorese bezeichnet. Eine Aufheizung auf die Zerstörungstemperatur der Partikel, sogenanntes "Freibrennen", ist nur nötig, wenn bereits vorhandene Ablagerungen beseitigt werden müssen. Dabei ist es insbesondere bevorzugt, wenn eine vorgegebene Temperaturdifferenz zwischen zumindest einer der Elektrodeneinheiten und dem Gasstrom eingehalten wird.

Eine weitere Fortbildungsform der Erfindung ist gekennzeichnet durch eine Erwärmungsvorrichtung zum Erhitzen der Partikel und/oder der ersten und/oder der zweiten Elektrodeneinheit, wobei die Erwärmungsvorrichtung vorzugsweise eine Quelle von Infrarotlicht, Laserlicht, Mikrowellen, elektrischen Wechselfeldern und/oder magnetischen Wechselfeldern aufweist. Diese Fortbildungsform dient ebenfalls dazu, Partikelablagerungen in vorteilhafter Weise zu verhindern bzw. zu reduzieren. Besonders problematisch sind Ablagerungen an der Elektrodeneinheit, die als Messelektrode ausgebildet ist. Partikelablagerungen müssen entweder aufwändig entfernt werden (beispielsweise durch Freibrennen der Sensorvorrichtung oder von Teilen davon) oder führen zu einer Verschlechterung des Messsignals. Vorteilhaft ist es daher, Partikelablagerungen an den Elektroden und/oder den Elektrodenschäften durch eine entsprechende Ausbildung der Sensorvorrichtung von vornherein zu vermeiden oder zumindest zu verringern. Ein zusätzlicher Vorteil ist es dabei, dass Feldverzerrungen durch Partikelablagerungen weniger stark beeinträchtigt werden.

Der erfindungsgemäßen Ausbildung der Sensorvorrichtung liegen unter anderem die folgenden Erkenntnisse hinsichtlich der Beeinflussung des Messsignals durch Partikelablagerungen zugrunde: Partikelablagerungen können in nachteiliger Weise zu einer Verschleppung bzw. Verzögerung des Messsignals führen. Nur die sich an der Messelektrode vorbeibewegenden Partikel generieren ein Messsignal, nicht jedoch die Partikel, die sich an der Messelektrode ablagern. Zu Beginn einer Messung bzw. bei sauberer Messelektrode lagern sich zunächst sehr viele Partikel an der Messelektrode ab, so dass das Messsignal nur gering ist. Mit zunehmender Ablagerung lösen sich auch wieder vermehrt Partikel ab bis sich ein Gleichgewicht eingestellt hat. Verändert sich die Partikelkonzentration, muss sich durch vermehrte Ablagerung bzw. Ablösung wieder ein neuer Gleichgewichtszustand einpendeln. Ein aussagekräftiges Messsignal wird jedoch nur im Gleichgewichtszustand generiert, so dass aufgrund der Ablagerungen das Messsignal sehr langsam reagiert. Wenn, wie durch die erfindungsgemäße Ausbildung der Sensorvorrichtung ermöglicht, die Ablagerungen verhindert bzw. verringert werden können, so muss nicht erst der sich langsam durch Ablagerung bzw. Ablösung einstellende Gleichgewichtszustand abgewartet werden, sondern es entsteht bereits sehr viel schneller ein aussagekräftiges Messsignal, d.h. das Zeitverhalten der Sensorvorrichtung wird verbessert. Erfindungsgemäß sind mehrere, alternativ oder kombiniert einzusetzende Maßnahmen zur Reduktion bzw. Vermeidung von Partikelablagerungen vorgesehen. Im Folgenden werden mehrere Möglichkeiten dargestellt, diese erfindungsgemäße Ausbildung der Sensorvorrichtung zu realisieren.

Bevorzugt ist es, dass die Sensorvorrichtung eine Erwärmungsvorrichtung aufweist, mit der die Partikel direkt selbst erhitzt werden können. Dazu weist die Erwärmungsvorrichtung beispielsweise eine Quelle von Infrarotlicht, Laserlicht, Mikrowellen, elektrischen Wechselfeldern und/oder magnetischen Wechselfeldern auf. Ein solches direktes Erhitzen bzw. Erwärmen der Partikel ist besonders energieeffizient. Vorzugsweise ist die Erwärmungsvorrichtung ausgebildet, die Partikel nur auf eine Temperatur aufzuheizen, die unterhalb der Zerstörungstemperatur der Partikel liegt.

Weiterhin bevorzugt ist es, wenn die Erwärmungsvorrichtung ausgebildet ist, die elektrischen Zuführungen zu den Elektrodeneinheiten und/oder die Elektrodenschäfte freizuhalten und so den elektrischen Widerstand gegenüber der Umgebung zu wahren. Dies kann durch Erwärmen der elektrischen Zuführungen selbst und/oder durch Erwärmen der Partikel in der Nähe der Oberflächen der elektrischen Zuführungen erfolgen. Je nach Ausgestaltung der Sensorvorrichtung gilt dies auch für die Elektrodenkontaktierungen.

Bei Elektrodeneinheiten, die als Feldverzerrungselektrode oder Gitterelektrode ausgebildet und in ein isolierendes Material eingebettet sind, hat das Verhindern bzw. Reduzieren von Partikelablagerungen weiterhin den Vorteil, dass die Aufrechterhaltung der Feldverzerrenden Wirkung nicht durch Partikelablagerungen beeinträchtigt wird.

Diese Maßnahme beruht auf der überraschenden Erkenntnis, dass auch mit einer Erwärmung der Partikel auf eine Temperatur unterhalb der Zerstörungstemperatur Ablagerungen effektiv verhindert bzw. verringert werden können. Es wurde erkannt, dass es besonders bevorzugt ist, insbesondere die Partikel in der Nähe der von der von Ablagerungen freizuhaltenden Oberfläche zu erwärmen. Auf diese Weise nimmt die Temperatur der Partikel mit zunehmendem Abstand von der freizuhaltenden Oberfläche ab, wodurch ein Partikelstrom weg von der freizuhaltenden Oberfläche entsteht.

Das Freihalten der ersten und/oder der zweiten Elektrodeneinheit von Partikeln durch die verschiedenen Fortbildungen der erfindungsgemäßen Sensorvorrichtung hat gegenüber dem als "Freibrennen" bezeichneten Erhitzen der Partikel bzw. der ersten und/oder der zweiten Elektrodeneinheit auf die Zerstörungstemperatur der Partikel den Vorteil, dass einerseits für den Heizvorgang weniger Energie verbraucht wird, andererseits die nicht für eine Messung zur Verfügung stehenden Zeiten des Freibrennens vermieden werden und stattdessen die Messung kontinuierlich erfolgen kann.

Eine bevorzugte Variante ist es, die erste und/oder die zweite Elektrodeneinheit zumindest abschnittsweise für Infrarotlicht, Laserlicht und/oder Mikrowellen durchlässig auszubilden und eine Quelle von Infrarotlicht, beispielsweise eine Glühwendel, eine Quelle von Laserlicht, und/oder eine Quelle von Mikrowellen derart anzuordnen, dass das Infrarotlicht, das Laserlicht und/oder die Mikrowellen die erste und/oder die zweite Elektrodeneinheit zumindest abschnittsweise durchdringen und die die erste und/oder die zweite Elektrodeneinheit umgebenden Partikel erwärmen. Diese Fortbildungsform hat den besonderen Vorteil einer sehr kompakten Bauweise, wobei gleichzeitig die Heizenergie sehr effizient eingesetzt werden kann, da erkannt wurde, dass es zum Freihalten der ersten und/oder der zweiten Elektrodeneinheit ausreicht, nur die Partikel in der Umgebung der Elektrodeneinheit zu erwärmen, da dies bereits zu dem vorteilhaften Partikelstrom von der Elektrodeneinheit weg führt. Bei einer röhrenförmigen Elektrodeneinheit mit einem inneren Hohlraum ist die Quelle von Infrarotlicht, Laserlicht und/oder Mikrowellen vorzugsweise innerhalb des Hohlraums angeordnet, wodurch die genannten Vorteile in besonders effektiver Weise erreicht werden können.

Eine weitere bevorzugte Möglichkeit ist es, dass die Erwärmungsvorrichtung der Sensorvorrichtung ausgebildet ist, die erste und/oder die zweite Elektrodeneinheit, vorzugsweise mittels Infrarotstrahlung, auf eine Temperatur zu erhitzen, die vorzugsweise höher ist als die des Gasstroms, jedoch weiterhin vorzugsweise niedriger als die Zerstörungstemperatur der Partikel.

Alternativ oder zusätzlich ist es bevorzugt, dass die Erwärmungsvorrichtung der Sensorvorrichtung ausgebildet ist, die erste und/oder die zweite Elektrodeneinheit (insbesondere die als Messelektrode ausgebildete Elektrodeneinheit) durch direkte Bestromung zu erhitzen. Dies erfolgt vorzugsweise durch induktive oder kapazitive Übertragung des benötigten Stroms, wobei vorzugsweise galvanisch getrennte Wechselströme zum Einsatz kommen, die im Eingangsbereich der Messeinheit, insbesondere im Eingangsbereich eines Messverstärkers, gefiltert werden können. Auf diese Weise können die erste und/oder die zweite Elektrodeneinheit direkt als Heizelement verwendet werden. Der zum Erhitzen der ersten und/oder der zweiten Elektrodeneinheit verwendete Wechselstrom ist vorzugsweise hochfrequent. Dazu kommt vorzugsweise Wechselstrom mit einer Frequenz von ca. 20kHz zum Einsatz. Dies ist ausreichend, wenn beispielsweise beim Einsatz einer Drahtgitterelektrode deren positiver Effekt auf das Zeitverhalten der Sensorvorrichtung genutzt werden soll. Wenn mittels einer strukturierten Elektrodeneinheit mit der Sensorvorrichtung auch die Gasgeschwindigkeit und/oder die Partikelbewegung bestimmt werden soll, ist es bevorzugt, wenn die Frequenz der modulieren Hochspannung und/oder des galvanisch getrennten Heizstromes etwa um Faktor 100 höher liegen als die auszuwertende Impulsfolge, d.h. vorzugsweise bei etwa 500kHz.

Eine weitere, alternativ oder zusätzlich einzusetzende Möglichkeit, die erste und/oder die zweite Elektrodeneinheit zu erwärmen, ist die indirekte Erwärmung. Dazu wird ein Heizelement beispielsweise innerhalb der ersten und/oder der zweiten Elektrodeneinheit platziert. Vorteilhaft an dieser Methode ist, dass der Strom für das Heizelement direkt zugeführt werden kann. Vorzugsweise wird eine Abschirmung zwischen der ersten und/oder der zweiten Elektrodeneinheit und dem Heizelement angeordnet. Dadurch kann die Übertragung des Stromes auf die erste und/oder die zweite Elektrodeneinheit effektiv verhindert werden. Alternativ ist bevorzugt, zur direkten Bestromung der Messelektrode einen galvanisch getrennten Wechselstrom zu verwenden. In diesem Fall kann auf eine Abschirmung zwischen der ersten und/oder der zweiten Elektrodeneinheit und dem Heizelement verzichtet werden.

Eine weitere bevorzugte Möglichkeit, Ablagerungen an der ersten und/oder der zweiten Elektrodeneinheit zu verhindern bzw. zu verringern, ist es, einen laminaren Strom gefilterter Luft über die erste und/oder die zweite Elektrodeneinheit zu leiten. Diese Maßnahme hat den weiteren Vorteil, die Abhängigkeit des Sensorsignals von der Gasgeschwindigkeit zu verringern. Die Anzahl Partikel, welche die erste und/oder die zweite Elektrodeneinheit erreichen und sich dort ablagern können, ist von der Verweilzeit der Partikel in der Sensorvorrichtung und somit von der Geschwindigkeit des Gasstroms abhängig. Wird nun ein Strom gereinigter Luft um die erste und/oder die zweite Elektrodeneinheit gelegt, können Partikelablagerungen weitgehend unabhängig von der Geschwindigkeit des Gasstroms und damit weitgehend unabhängig von der Verweilzeit der Partikel in der Sensorvorrichtung verhindert werden. Eine ähnliche Wirkung kann alternativ oder zusätzlich dadurch erzeugt werden, dass die Sensorvorrichtung eine Strömungsführung aufweist, mit der die im Gasstrom enthaltenen Partikel auf eine Bahn gelenkt werden, die möglichst weit von der ersten und/oder der zweiten Elektrodeneinheit beabstandet ist. Vorzugsweise leitet die Strömungsführung die Partikel in die Mitte zwischen der ersten und/oder der zweiten Elektrodeneinheit. Eine weitere Möglichkeit ist es, den Abstand zwischen der ersten und/oder der zweiten Elektrodeneinheit zu vergrößern. Bevorzugt ist beispielsweise ein Abstand zwischen der ersten und/oder der zweiten Elektrodeneinheit stromaufwärts von ca. 3mm und stromabwärts von ca. 4 bis 5mm.

Besonders hervorzuheben ist, dass durch die hier beschriebenen bevorzugten Maßnahmen eine Angleichung der Verweilzeit aller Partikel ermöglicht wird, da weitgehend verhindert wird, dass die Partikel eine oder beide der Elektrodeneinheiten erreichen. Für das Sensorsignal hat dies zur Folge, dass die Abhängigkeit des Signals von der Gasgeschwindigkeit deutlich reduziert wird.

Eine weitere Fortbildungsform der Erfindung ist gekennzeichnet durch eine Wechselstromquelle zum Überlagern eines Hochspannungsgleichstroms mit Wechselstrom, vorzugsweise mit einem Wechselstrom mit rechteckförmiger Amplitude, und/oder eine Schallquelle zur Beschallung der ersten und/oder der zweiten Elektrodeneinheit mit einem Schall von hoher Intensität, insbesondere einem Schall mit periodischer Änderung der Frequenz. Diese Fortbildungsform umfasst weitere Maßnahmen, mit denen in vorteilhafter Weise Partikelablagerungen an den Elektroden und/oder den Elektrodenschäften reduziert bzw. verhindert werden können. Ein zusätzlicher Vorteil ist es dabei, dass Feldverzerrungen durch Partikelablagerungen weniger stark beeinträchtigt werden.

Die erste Alternative dieser Fortbildungsform beruht auf der überraschenden Erkenntnis, dass eine mit Gleichstrom zu betreibende Sensorvorrichtung auch dann korrekte - und in der erfindungsgemäßen Ausführungsform sogar verbesserte - Messergebnisse liefern kann, wenn dem Hochspannungsgleichstromanteil ein, vorzugsweise hochfrequenter, Wechselstrom, beispielsweise mit einer Frequenz von ca. 20kHz, überlagert wird. Es wurde erkannt, dass je größer die Wechselspannungsamplitude ist, sich Partikel umso langsamer und schlechter ablagern und umso schneller reagiert die Sensorvorrichtung bzw. verbessert sich deren Zeitverhalten.

Wenn der Hochspannung ein hochfrequenter Wechselstromanteil aufgeprägt wird, so kommt es zu einer kapazitiven Übertragung dieses Wechselstromanteils auf die Messelektrode Daher weist vorzugsweise die Messeinheit einen Messverstärker auf, der ausgebildet ist, den Wechselstromanteil eingangsseitig zu filtern. Auf diese Weise wird es erfindungsgemäß ermöglicht, dass das Messergebnis, beispielsweise im pA-Bereich, nicht vom Wechselstromanteil gestört wird, wenn dieser Wechselstromanteil ausreichend hochfrequent ist, beispielsweise ein Wechselstromanteil mit einer Frequenz von 20kHz. Die Filterung des Wechselstromanteils ist möglich, da ein induktiv oder kapazitiv übertragener Wechselstromanteil galvanisch getrennt ist und kein Gleichstromanteil vorhanden ist.

Allerdings nimmt die Empfindlichkeit des Sensors ab, wenn die maximale Hochspannung, vorzugsweise eine Hochspannung von ca. 2000V, nicht erhöht werden kann. So reduziert sich z.B. bei einem sinusförmigen Wechselstromanteil mit einer Modulationstiefe von 125% bezogen auf die maximale Spannung die Empfindlichkeit um 73%. Daher ist es besonders bevorzugt, dass die Wechselstromquelle ausgebildet ist, einen Wechselstrom mit einer Kurvenform bereitzustellen, bei der die Abnahme der Empfindlichkeit möglichst gering ist, beispielsweise durch eine Rechteckspannung anstelle eines sinusförmigen Wechselstromanteils. Weiterhin ist bevorzugt, dass die Wechselstromquelle ausgebildet ist, ein für das Sensorverhalten günstiges Pulsbreitenverhältnis bereitzustellen, insbesondere eine Rechteckspannung mit einem Pulsbreitenverhältnis von 3:1. Dadurch verringert sich die Empfindlichkeit bei gleicher Modulationstiefe von 125% nur um 25% und die Anlagerungsbehinderung der Partikel wird zusätzlich gesteigert. Diese Maßnahme ist jedoch nicht auf sinus- oder rechteckförmigen Wechselstrom begrenzt. Vielmehr ist jede Kurvenform einsetzbar, wenn sämtliche Wechselstromanteile hochfrequent genug sind.

Die zweite Alternative dieser Fortbildungsform sieht eine Schallquelle vor, die ausgebildet ist, die erste und/oder die zweite Elektrodeneinheit mit einem Schall von hoher Intensität zu beschallen, insbesondere mit einem Schall mit periodischer Änderung der Frequenz. Als Schallquelle kann beispielsweise eine Pumpe dienen, wenn die Pulsation ausreichend hochfrequent ist, um das Messsignal nicht zu beeinflussen. Bevorzugt ist beispielsweise eine Frequenz von ca. 100Hz bei einer Kolben- oder Membranpumpe mit zwei Kolben bzw. Membranen. Ist die Sensorvorrichtung direkt in einem Abgasrohr platziert, so kann auch die Abgaspulsation, z.B. bei Kolbenmotoren, zur Beschaltung genutzt werden. Besonders bevorzugt ist es, wenn die Schallquelle ausgebildet ist, die Schallfrequenz periodisch zu ändern, d.h. zu wobbeln, um die Positionen von Schwingungsknoten zu verändern. Die Modulationstiefe des Wobbelns ist dabei vorzugsweise derart einstellbar, dass sich die Schwingungsknoten und -bäuche im Sensorbereich mindestens um die halbe Wellenlänge bewegen. Da Schall hoher Intensität I.a. tonalen Charakter hat, entstehen innerhalb der Messkammer bzw. im Abgasrohr stehende Wellen. Teile der Sensorvorrichtung, die sich in Schwingungsknoten befinden, werden somit weniger gut von Ablagerungen freigehalten, insbesondere bei hohen Frequenzen (Ultraschall). Eine optimale Wirkung wird erzielt, wenn alle freizuhaltenden Teile der Sensorvorrichtung überstrichen werden.

Die zuvor beschriebene Sensorvorrichtung zur Detektion von in einem Gasstrom enthaltenen elektrisch leitenden und/oder elektrisch geladenen Partikeln ist vorzugsweise dadurch gekennzeichnet, dass die Messeinheit ausgebildet ist, um Partikel über eine Erfassung elektromagnetischer Strahlung, die von den Partikeln abgegeben wird, und/oder eine Erfassung eines durch die Partikel induzierten Stromflusses und/oder eine Erfassung der Kapazitäten der Partikel zu detektieren.

Dabei ist die erfindungsgemäße Sensorvorrichtung vorzugsweise weiterhin ausgebildet, aufeinanderfolgend oder alternierend zumindest zwei, vorzugsweise mehrere, Messsequenzen durchzuführen, wobei eine Messsequenz beispielsweise umfasst: Erfassung der Partikelladung und/oder Erfassung elektromagnetischer Strahlung, die von den Partikeln abgegeben wird, und/oder Erfassung eines durch die Partikel induzierten Stromflusses und/oder Erfassung der Kapazitäten der Partikel und/oder Erfassen eines Massenstroms des Gasstroms und/oder Erfassen einer Temperatur des Gasstroms.

Die Detektion der Partikel über eine Erfassung elektromagnetischer Strahlung, die von den Partikeln abgegeben wird, beruht auf der Erkenntnis, dass die Partikel sich wie Dipole verhalten und elektromagnetische Strahlung abgeben, d.h. mit der Variationsgeschwindigkeit des elektrischen Feldes funken, wenn sie sich durch ein strukturiertes elektrisches Feld bewegen und dadurch die in den Partikeln gespeicherte Energie wiederholt umgewandelt wird. Dies kann bevorzugt dadurch verstärkt werden, dass anstelle von Gleichstrom ein Wechselstrom an die Sensorvorrichtung angelegt wird. Wird die Frequenz derart verändert, dass sie der Resonanzfrequenz der Partikel entspricht, so kann dieses gemessen werden. Eine Hochspannung ist dabei nicht erforderlich. Die Resonanzfrequenz $f_R$ ist dabei von der Partikelkapazität $C_P$ und deren Eigeninduktivität $L_i$ abhängig.

$$C_P \approx e_0 \cdot e_r \cdot d = 8{,}854 \cdot 10^{-12}\,\frac{\mathrm{F}}{\mathrm{m}} \cdot e_r \cdot d$$

$$L_i \approx \frac{\mu_0 \cdot \mu_r \cdot d}{8\pi} = \frac{1{,}257 \cdot 10^{-6}\,\dfrac{\mathrm{H}}{\mathrm{m}} \cdot \mu_r \cdot d}{8\pi}$$

$$f_R = \frac{1}{2\pi \cdot \sqrt{L_i \cdot C_P}}$$

Ist die Resonanzfrequenz erreicht, wird Leistung in Form von Funkwellen abgegeben. Diese Funkwellen können entweder direkt gemessen werden oder es wird die abgegebene Leistung gemessen. Durch Veränderung der Frequenz wird es auf diese Weise möglich, eine Partikelverteilung direkt zu messen. Durch eine Kombination mit der Erfassung eines durch die Partikel induzierten Stromflusses, d.h. einer induktiven Messung, bei der ebenfalls Ausgleichsströme fließen, kann auf vorteilhafte Weise zusätzlich zur Partikelgröße die Permeabilitätszahl $\mu_r$ sowie die Dielektrizitätskonstante $e_r$ bestimmt werden.

Die Detektion der Partikel über eine Erfassung eines durch die Partikel induzierten Stromflusses beruht auf der im Folgenden dargelegten Erkenntnis: Die zu detektierenden Partikel bewegen sich durch ein inhomogenes elektrisches Feld. Da die Partikel elektrisch leitend sind, bewegen sich die Ladungsträger, abhängig vom umgebenden elektrischen Feld, an die Oberfläche der Partikel und Rekombinieren wieder bei Abnahme des elektrischen Feldes. Da sich relativ zum Partikel das elektrische Feld ändert, fließen daher entsprechende Ausgleichsströme durch die Partikel. Jeder Stromfluss erzeugt senkrecht zur Stromrichtung ein Magnetfeld. Da sich der Stromfluss ständig ändert, ändert sich auch das resultierende Magnetfeld. Die erfindungsgemäße Sensorvorrichtung weist daher vorzugsweise eine Spule auf. In dieser Spule kann auf diese Weise einen Stromfluss induziert werden, der gemessen werden kann. Dieser induzierte Strom hat dabei dieselbe Informationsdichte wie der mittels der zuvor beschriebenen Ausführungsformen gemessene Ladungsstrom. Jedoch werden durch die Detektion der Partikel über eine Erfassung eines durch die Partikel induzierten Stromflusses zusätzliche Informationen über die Partikel, insbesondere über ihre Leitfähigkeit, gewonnen. Nichtleitende Partikel werden auf diese Weise nicht erfasst, so dass weniger Querempfindlichkeiten zu erwarten sind. Durch diese Messanordnung ist es möglich, neben der Partikelgröße und der Partikelform auch den spezifischen Widerstand sowie die Dielektrizitätskonstante zu ermitteln.

Die Detektion der Partikel über eine Erfassung der Kapazitäten der Partikel beruht auf der im Folgenden dargestellten Erkenntnis: Wenn sich elektrisch leitende Partikel in einem elektrischen Feld befinden, so werden die Ladungsträger innerhalb der Partikel durch die Influenz des Feldes getrennt und bewegen sich zur Partikeloberfläche, bis das Feld innerhalb der Partikel Null ist. Da sich die Ladungsträger nun auf der Oberfläche der Partikel befinden, können die Partikel Kondensatoren betrachtet werden, deren Platten durch die Ladungsträger ausgebildet werden. Wird nun ein elektrisches Wechselfeld der Hochspannung überlagert, so können diese so ausgebildeten Kapazitäten bestimmt werden (z.B. durch Verstimmung eines Schwingkreises, oder einer kapazitiven Brückenschaltung). Die Hochspannung muss zu diesem Zwecke lediglich größer sein als die zur Kapazitätsbestimmung verwendete Amplitude des verwendeten Wechselstromes. Die Partikel verhalten sich in dieser Messanordnung wie in Reihe geschaltete Kapazitäten. Das Messsignal, d.h. die Partikelkapazität $C_P$, ist dabei abhängig von der Größe der Partikel (Durchmesser d) und den dielektrischen Eigenschaften des Partikelmaterials (Dielektrizitätskonstante er):

$$C_P \approx e_0 \cdot e_r \cdot d = 8{,}854 \cdot 10^{-12}\, \frac{\mathrm{F}}{\mathrm{m}} \cdot e_r \cdot d$$

Hervorzuheben ist, dass auf diese Weise auch Partikel kapazitiv vermessen werden können, die keine dielektrischen Eigenschaften haben. Um diesen Effekt nutzen zu können, müssen die Partikel jedoch elektrisch leitfähig sein, wie dies beispielsweise bei Ruß der Fall ist. Sind die Partikel nicht leitfähig, so kann lediglich die Kapazitätsänderung des Sensors aufgrund der Veränderung des Dielektrikums innerhalb der Sensorplatten bestimmt werden. Dies ist auch der Fall, wenn keine Hochspannung überlagert ist. Da Ruß jedoch nur geringe dielektrische Eigenschaften hat, ist ohne Anlegen der Hochspannung das Messergebnis verbesserungswürdig. Lagern sich jedoch Partikel auf den Sensorelektroden ab, so können diese durchaus kapazitiv vermessen werden. Dies ist insbesondere dann sinnvoll, wenn mit Ablagerungen von stark dielektrischem Material (z.B. Salz) zu rechnen ist, um das Messsignal zu korrigieren.

Ein weiterer Vorteil der kapazitiven Messung ist, dass das Signal deutlich weniger durch die Geschwindigkeit, mit der die Partikel sich durch die Sensorplatten bewegen, abhängig ist.

Weitere vorteilhafte Ausführungsvarianten der erfindungsgemäßen Sensorvorrichtung ergeben sich durch Kombination der hier erörterten bevorzugten Merkmale und Ausführungsformen.

Offenbart wird ferner eine Sensorvorrichtung zur Bestimmung der Temperatur eines Gasstroms, insbesondere eines Abgasstroms eines Dieselmotors, umfassend einen Hitzdraht, der so angeordnet ist, dass er in dem Gasstrom platzierbar ist, eine Steuereinheit, die ausgebildet ist, den Hitzdraht zur Ermittlung der Temperatur durch eine Messung des ohmschen Widerstands zu ermitteln, dadurch gekennzeichnet, dass die Steuereinheit ausgebildet ist, um den Hitzdraht zur Messung des ohmschen Widerstands mit einem gepulsten Messstrom anzusteuern.

Da die Temperatur beispielsweise von Abgasen eines Dieselmotors stark schwanken kann, ist eine möglichst genaue Kenntnis der Temperatur und der Temperaturschwankungen von besonderer Bedeutung. Insbesondere auch zur Ermittlung des Massenstroms und zur weiteren Auswertung von In einem Gasstrom quantitativ detektierten Partikeln ist die Kenntnis der Temperatur des Gasstroms erforderlich. Die Verbesserung der Bestimmung der Temperatur eines Gasstroms dient somit in vorteilhafter Weise auch einer Verbesserung der Messgenaulgkeit, -empfindlichkeit und/oder -geschwindigkeit von Sensorvorrichtungen und/oder Verfahren zur Detektion von in einem Gasstrom enthaltenen elektrisch leitenden und/oder elektrisch geladenen und/oder elektrostatisch aufladbaren Partikeln und/oder von Sensorvorrichtungen und/oder Verfahren zur Bestimmung eines Massenstroms eines Gasstroms.

Zur Temperaturmessung wird üblicherweise ein Hitzdraht mit einem kontinuierlichen Messstrom bestromt, und die Änderung des Ohmschen Widerstands bei einer Temperaturveränderung gemessen. Der hier Sensorvorrichtung beruht auf der Erkenntnis, dass die Erwärmung des zur Temperaturmessung verwendeten Widerstands abhängig ist vom mittleren Stromfluss. Wird der Messstrom gepulst, d.h. während einer Messphase mit einem Strom versehen und während einer Abkühlphase nicht mit Strom versehen, so kann der Stromfluss während der Messphase wesentlich stärker sein als ein für eine kontinuierliche Bestromung zulässiger Strom. Ein höherer Strom ermöglicht jedoch eine genauere Temperaturmessung über die Messung des ohmschen Widerstands des eingesetzten Hitzdrahts bzw. Widerstands.

Diese Sensorvorrichtung ermöglicht in vorteilhafter Weise eine wesentlich schnellere und präzisere Messung der Temperatur dadurch, dass der Hitzdraht zur Messung des ohmschen Widerstands nicht mit einem gleichbleibenden, sondern einem gepulsten Messstrom angesteuert wird. Je nach Frequenz der Strompulse können somit eine Vielzahl von Messwerten pro Sekunde generiert werden.

Weiterhin kann auf diese Weise ein wesentlich geringerer Widerstand (Größenordnung 0.1 Ohm) eingesetzt werden als die bisher in der Praxis für die Temperaturmessung üblicherweise verwendeten Platinwiderstände mit einer Größenordnung von 100 bis 1000 Ohm bei 0°C. Dies hat weiterhin den Vorteil, dass die Temperaturmessung auch wesentlich schneller erfolgen kann, da ein Hitzdraht mit geringerem Querschnitt die Temperaturanderung des Gases wesentlich schneller abbildet als ein Hitzdraht mit einem größeren Querschnitt.

Damit wird in vorteilhafter Weise ermöglicht, die Temperatur des Gasstroms auf einfache, und effiziente Weise mit hoher Genauigkeit und Schnelligkeit zu ermitteln.

Die Sensorvorrichtung zur Bestimmung der Temperatur eines Gasstroms kann dadurch fortgebildet werden, dass Stärke und/oder Zeitdauer der Strompulse und/oder die Zeitdauer zwischen aufeinander folgenden Strompulsen derart gewählt ist bzw. sind, dass die Erwärmung des Hitzdrahts einen vorgegebenen Grenzwert von vorzugsweise 0,1 K und/oder dass, insbesondere durch Wärmeleitung und/oder Wärmestrahlung und/oder Konvektion bestimmte, Wärmeabgebevermögen des Hitzdrahts nicht überschreitet.

Diese Fortbildungsform beruht auf der Erkenntnis, dass die während der Messphase durch Bestromung herbeigeführte Erwärmung des Hitzdrahts während der Abkühlphase wieder abzuführen ist. Dazu wird bevorzugt das Warmeabgabevermögen des Hitzdrahts ermittelt und die Bestromung während der Messphase derart gewählt, dass die Erwärmung des Hitzdrahts das Warmeabgabevermögen nicht überschreitet Wärme kann beispielsweise durch Strahlung und/oder Konvektion abgegeben werden und/oder durch Leitung, beispielsweise über die Befestigungen des Hitzdrahts. Vereinfachend kann auch ein Grenzwert, vorzugsweise ein Grenzwert von ca. 0,1 K, vorgegeben werden, den die Erwärmung nicht überschreiten soll. Auf diese Weise wird sichergestellt, dass die Temperaturermittlung nicht durch eine dauerhafte zu starke Erwärmung des Hitzdrahts verfälscht wird.

Die Sensorvorrichtung zur Bestimmung der Temperatur eines Gasstroms kann dadurch fortgebildet werden, dass der Hitzdraht einen Widerstand von wertiger als 10 Ohm aufweist, vorzugsweise einen Widerstand von weniger als 1 Ohm, insbesondere einen Widerstand in der Größenordnung von 0,1 Ohm, und der Hitzdraht vorzugsweise aus Platin ausgebildet ist

Diese Fortbildung ist besonders bevorzugt für Sensorvorrichturtgen, die im Abgasstrom von Verbrennungsmotoren, Heizungsanlagen, die kohlenstoffhaltige Energiereserven verbrennen, insbesondere Dieselmotoren, eingesetzt werden.

Die Sensorvorrichtung zur Bestimmung der Temperatur eines Gasstroms kann dadurch fortgebildet werden, dass die Zeitdauer zwischen aufeinander folgenden Strompulsen ein Vielfaches, vorzugsweise das Zehn- bis Tausendfache, insbesondere etwa das Hundertfache, der Zeitdauer der Strompulse beträgt.

Diese Fortbildungsform sieht vor, dass die Abkühlphasen wesentlich länger sind als die Messphasen, während denen der Hitzdraht mit Strompulsen bestromt wird. Je länger die Abkühlphasen zwischen den Messphasen sind, desto höher kann die Bestromung während der Messphasen ausfallen. Daher sind Abkühlphasen in der Größenordnung des Hundertfachen der Messphasen besonders bevorzugt.

Weitere vorteilhafte Ausführungsvarianten der Sensorvorrichtung ergeben sich durch Kombination der hier erörterten bevorzugten Merkmale und Ausführungsformen.

Ferner offenbart wird eine Sensorvorrichtung zur Bestimmung eines Massenstroms eines Gasstroms, insbesondere eines Abgasstroms eines Dieselmotors, umfassend einen ersten Hitzdraht, der so angeordnet ist, dass er in dem Massenstrom platzierbar ist, eine Regel- oder Steuereinheit, welche ausgebildet ist, den ersten Hitzdraht auf eine bestimmte Temperatur oberhalb der Temperatur des Massenstroms zu erhitzen und den Massenstrom über Messung einer Spannung zu ermitteln, die zur Aufrechterhaltung dieser bestimmten Temperatur des ersten Hitzdrahts erforderlich ist, eine Messvorrichtung zum Ermitteln der Temperatur des Gasstroms über eine Messung des Widerstands eines zweiten Hitzdrahts, eine Steuereinheit, die ausgebildet ist, den ersten Hitzdraht auf eine Temperatur zu steuern, die von der Temperatur des Gasstroms abhängig ist, und eine Korrektureinheit, die ausgebildet ist, den aus der Spannung ermittelten Massenstrom um einen von der aus dem Widerstand des zweiten Hitzdrahts ermittelten Temperatur abhängigen Wert zu korrigieren, dadurch gekennzeichnet, dass die Meßvorrichtung zum Ermitteln der Temperatur eine der zuvor beschriebenen Sensorrvorrichtungen zur Bestimmung der Temperatur eines Gasstroms ist.

Zur Ermittlung des Massenstroms ist ein temperaturgetührter Massenstromsensor mit zwei Hitzdrähten besonders bevorzugt, um in einem stark schwankenden Temperaturbereich beispielsweise im Abgasstrom eines Dieselmotors eine genaue Massenstrombestimmung durchführen zu können. Mit der zuvor beschriebenen Sensorvorrichtung zur Bestimmung der Temperatur eines Gasstroms mittels gepulster Bestromung wird es in vorteilhafter Weise ermöglicht, den Massenstromsensor sehr schnell und mit hoher Genauigkeit der Gasstromtemperatur nachzuführen und somit auch die Messqualität des Massenstromsensors zu erhöhen.

Dabei ist insbesondere bevorzugt, dass der zweite Hitzdraht der Sensorvorrichtung zur Bestimmung eines Massenstroms eines Gasstroms und der Hitzdraht der Sensotvorrichtung zur Bestimmung der Temperatur eines Gasstroms identisch sind.

Für eine weitergehende Auswertung und Analyse der quantitativ detektierten, in einem Gasstrom enthaltenen elektrisch leitenden und/oder elektrisch geladenen und/oder elektrostatisch aufladbaren Partikeln ist die Kenntnis des Massenstroms des Gasstroms von Bedeutung. Die Verbesserung der Bestimmung eines Massenstroms eines Gasstroms dient somit in vorteilhafter Weise auch einer Verbesserung der Messgenauigkeit, - empfindlichkeit und/oder -geschwindigkeit von Sensorvorrichtungen und/oder Verfahren zur Detektion von in einem Gasstrom enthaltenen elektrisch leitenden geladenen und/oder elektrostatisch aufladbaren und/oder elektrisch geladenen Partikeln, insbesondere in Kombination mit der/dem erfindungsgemäßen Sensorvorrichtung bzw. Verfahren zur Bestimmung der Temperatur eines Gasstroms.

Offenbart wird ferner die Verwendung einer zuvor beschriebenen Sensorvorrichtung zur Bestimmung der Temperatur eines Gasstroms in einer weiteren Sensorvorrichtung zur Bestimmung eines Massenstroms eines Gasstroms, insbesondere eines Abgasstroms eines Dieselmotors, umfassend einen ersten Hitzdraht, der so angeordnet ist, dass er in dem Massenstrom platzierbar ist, eine Regel- oder Steuereinheit, welche ausgebildet ist, den ersten Hitzdraht auf eine bestimmte Temperatur oberhalb der Temperatur des Massenstroms zu erhitzen und den Massenstrom über Messung einer Spannung zu ermitteln, die zur Aufrechterhaltung dieser bestimmten Temperatur des ersten Hitzdrahts erforderlich ist, eine Messvorrichtung zum Ermitteln der Temperatur des Gasstroms über eine Messung des Widerstands eines zweiten Hitzdrahts, eine Steuereinheit, die ausgebildet ist, den ersten Hitzdraht auf eine Temperatur zu steuern, die von der Temperatur des Gasstroms abhängig ist, und eine Korrektureinheit, die ausgebildet ist, den aus der Spannung ermittelten Massenstrom um einen von der aus dem Widerstand des zweiten Hitzdrahts ermittelten Temperatur abhängigen Wert zu korrigieren.

Dabei ist insbesondere bevorzugt, dass der zweite Hitzdraht der Sensorvorrichiung zur Bestimmung eines Massenstroms eines Gasstroms und der Hitzdraht der Messvorrichtung zur Bestimmung der Temperatur eines Gasstroms identisch sind.

Zu den Vorteilen, Ausführungsvarianten und Ausführungsdetails dieser weiteren Aspekte der Offenbarung und ihrer Fortbildungen wird auf die zuvor beschriebenen, entsprechenden Aspekte derjenigen Sensorvorrichtungan und ihrer Fortbildungen verwiesen, die für die entsprechenden weiteren Aspekte relevant sind.

Gemäß eines weiteren Aspekts der Erfindung wird die Aufgabe gelöst durch ein Verfahren zur Bestimmung von in einem Gasstrom enthaltenden elektrisch leitenden und/oder elektrisch geladenen Partikeln, insbesondere Rußpartikeln im Abgasstrom eines Dieselmotors, umfassend den Schritt: Bereitstellen von zumindest einer sich in einer Längsrichtung erstreckenden ersten und einer zweiten Elektrodeneinheit, wobei die erste Elektrodeneinheit als Messelektrode ausgebildet ist und in dem Gasstrom angeordnet werden kann, gekennzeichnet durch die Schritte: Erfassen der Partikel mittels an der ersten Elektrodeneinheit angeordneter zumindest zwei diskreter Erlassungsbereiche, die entlang der Erstreckungsrichtung der Elektrodeneinheit voneinander beabstandet sind, Filtern galvanisch getrennter Wechselströme in einem Eingangsbereich eines Messverstärkers, zu dem die erste Elektrodeneinheit einen Ausgang aufweist.

Das erfindungsgemal3e Verfahren kann fortgebildet werden nach den Ansprüchen 10 bis 15 und ist weiterhin auch geeignet, in einem Gasstrom enthaltene elektrostatisch aufladbare Partikel zu bestimmen.

Offenbart wird ferner ein Verfahren zur Bestimmung der Temperatur eines Gasstroms, insbesondere eines Abgasstroms eines Dieselmotors, umfassend die Schritte: Platzieren eines Hitzdrahts in dem Massenstrom, Ermitteln der Temperatur des Gasstroms durch eine Messung des ohmschen Widerstands des Hitzdrahts, gekennzeichnet durch den Schritt: Ansteuern des Hitzdrahts zur Messung des ohmschen Widerstands mit einem gepulsten Messstrom.

Offenbart wird ferner ein Verfahren zur Bestimmung eines Massenstroms eines Gasstroms, umfassend die Schritte: Platzieren eines ersten Hitzdrahts in dem Massenstrom, Erhitzen des ersten Hitzdrahts auf eine bestimmte Temperatur oberhalb der Temperatur des Massenstroms und Ermitteln des Massenstroms über Messen einer Spannung, die zur Aufrechterhaltung dieser bestimmten Temperatur des ersten Hitzdrahts erforderlich ist, Ermitteln der Temperatur des Gasstroms über Bestimmen des Widerstands eines zweiten Hitzdrahts, Steuern des ersten Hitzdrahts auf eine Temperatur, die von ermittelten Temperatur des Gasstroms abhängig ist, und Korrigieren des aus der gemessenen Spannung ermittelten Massenstroms um einen von der aus dem gemessenen Widerstand des Hitzdrahts ermittelten Temperatur des Gasstroms abhängigen Wert, **dadurch gekennzeichnet, dass** die Temperatur des Gasstroms nach einem zuvor beschriebenen Verfahren zur Bestimmung der Temperatur eines Gasstroms ermittelt wird.

Sämtliche Verfahren und ihre Fortbildungen weisen Merkmale bzw. Verfahrensschritte auf, die sie insbesondere dafür geeignet machen, für eine oder mehrere der erfindungsgemäßen Sensorvorrichtungen und ihrer Fortbildungen verwendet zu werden. Zu den Ausführungsformen, spezifischen Merkmalen, Varianten und Vorteilen der Merkmale bzw. Verfahrensschritte dieser Verfahren und ihrer Fortbildungen wird auf die vorangegangene Beschreibung zu den entsprechenden Vorrichtungsmerkmalen verwiesen.

Bevorzugte Ausführungsformen der Erfindung werden beispielhaft anhand der beiliegenden Figuren beschrieben. Es zeigen:

Fig. 1    einen Schnitt durch eine erste Ausführungsform einer erfindungsgemäßen ersten Elektrodeneinheit,

Fig. 2    drei verschiedene Einzelpulssignale, die durch an der Elektrodeneinheit aus Fig. 1 vorbeiströmende Partikeln erzeugt wurden,

Fig. 3    ein überlagertes Messsignal nach einer Hochpassfilterung,

Fig. 4    das Ergebnis der Frequenzanalyse des überlagerten Messsignals aus Fig. 3 nach einer Hochpassfilterung,

Fig. 5    das Ergebnis der Autokorrelation des überlagerten Messsignals aus Fig. 3,

Fig. 6    das Ergebnis der Frequenzanalyse des Korrelationssignals aus Fig. 5,

Fig. 7    einen Schnitt durch eine zweite Ausführungsform einer erfindungsgemäßen ers- ten Elektrodeneinheit,

Fig. 8    sechs verschiedene Einzelpulssignale, die durch an der Elektrodeneinheit aus Fig. 7 vorbeiströmende Partikeln erzeugt wurden,

Fig. 9    das Ergebnis der Frequenzanalyse des Messsignals aus Fig. 8,

Fig. 10     das Ergebnis der Autokorrelation des Messsignals aus Fig. 8,

Fig. 11     das Ergebnis der Frequenzanalyse des Korrelationssignals aus Fig. 10,

Fig. 12     drei Phasen der erfindungsgemäßen gepulsten Ohmschen Widerstandsmessung,

Fig. 13     eine koaxialen Ausführung einer erfindungsgemäßen Sensorvorrichtung in einem Längsschnitt (Fig. 13a) und einem Querschnitt entlang der Ebene A-A (Fig. 13b),

Fig. 14     eine Möglichkeit einer beheizten Messelektrode einer erfindungsgemäßen Sensorvorrichtung in einem Längsschnitt (Fig. 14a) und einem Querschnitt entlang der Ebene A-A (Fig. 14b),

Fig. 15     eine weitere koaxiale Ausführung einer erfindungsgemäßen Sensorvorrichtung in einem Längsschnitt (Fig. 15a) und einem Querschnitt entlang der Ebene A-A (Fig. 15b),

Fig. 16     eine weitere erfindungsgemäße Sensorvorrichtung mit strukturierter Hochspan- nungs- und Messelektrode in einem Längsschnitt (Fig. 16a) und einem Quer- schnitt entlang der Ebene A-A (Fig. 16b),

Fig. 17     eine erfindungsgemäße Sensorvorrichtung in einer Ausführung als Plattenkon- densator in einem Längsschnitt (Fig. 17a) und einem Querschnitt entlang der Ebene A-A (Fig. 17b),

Fig. 18     eine weitere erfindungsgemäße Sensorvorrichtung ebenfalls in einer Ausführung als Plattenkondensator in einem Längsschnitt (Fig. 18a) und einem Querschnitt entlang der Ebene A-A (Fig. 18b),

Fig. 19     zeigt Partikel im elektrischen Feld (Fig. 19a) und einen Ersatzschaltplan (Fig. 19b),

Fig. 20     eine weitere Ausführung einer erfindungsgemäßen Sensorvorrichtung mit einer Messspule,

Fig. 21     eine Anwendung der erfindungsgemäßen Sensorvorrichtung,

Fig. 22     die Wirkung einer Ablagerungskontrolle durch modulierte Hochspannung in einer erfindungsgemäßen Sensorvorrichtung,

Fig. 23     eine bevorzugte Kurvenform eines Wechselstromanteils für die Ablagerungskont- rolle durch modulierte Hochspannung in einer erfindungsgemäßen Sensorvorrich- tung,

Fig. 24     eine schematische Darstellung einer Messelektrode einer erfindungsgemäßen Sensorvorrichtung, die durch direkte induktive Bestromung erhitzt werden kann,

Fig. 25     eine schematische Darstellung einer Messelektrode einer erfindungsgemäßen Sensorvorrichtung, die durch direkte kapazitive Bestromung erhitzt werden kann und

Fig. 26     eine schematische Schnittdarstellung einer Messelektrode einer erfindungsgemä- ßen Sensorvorrichtung mit indirekter Beheizung.

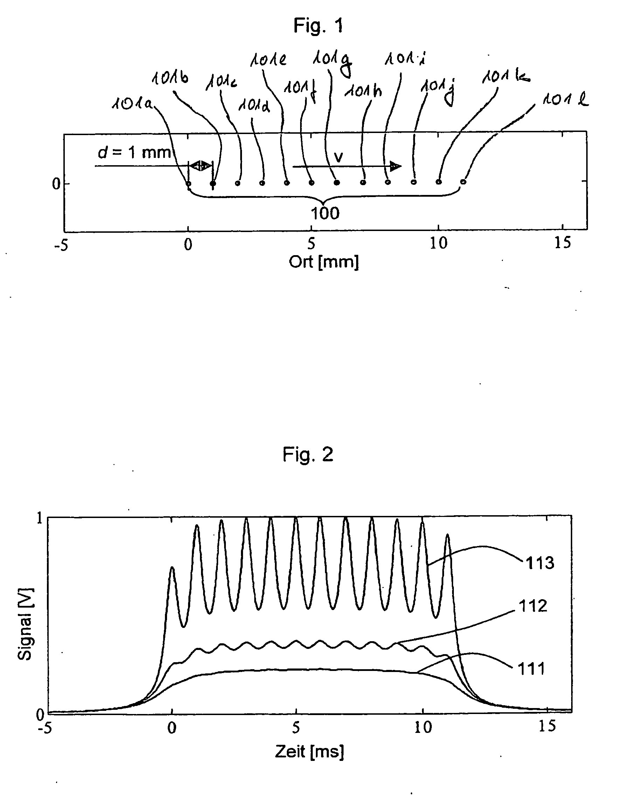

Fig. 1 zeigt einen Schnitt durch die Einzelelektroden 101 a bis I einer ersten Ausführungsform einer ersten Elektrodeneinheit 100. Die Einzelelektroden 101a bis I sind in einer Reihe parallel zueinander äquidistant mit einem Abstand d von jeweils 1 mm voneinander angeordnet. Die Einzelelektroden 101a bis I sind in ihrer Längsausrichtung, die normal zur Schnittebene des in Fig. 1 dargestellten Schnittes verläuft, senkrecht zur Strömungsrichtung v des Gasstroms angeordnet. Die Reihe bzw. Flucht der Einzelelektroden 101 a bis I wiederum verläuft parallel zur Strömungsrichtung v des Gasstroms.

Diese Ausbildung der Elektrodeneinheit 100 als Einzelelektroden 101a bis I führt nicht nur zu einer wesentlichen Verbesserung des Sensorsignals, sondern bietet neben dieser Signalverbesserung auch den Vorteil, weitere Informationen im Sensorsignal zu erzeugen, mit Hilfe deren eine Bestimmung der Gasgeschwindigkeit im Sensor möglich ist.

Fig. 2 stellt drei Messsignale dar, das ein an den in Fig. 1 gezeigten Einzelelektroden 101a bis I in unterschiedlichem Abstand von der ersten Elektrodeneinheit bzw. unterschiedlicher Höhe über der ersten Elektrodeneinheit vorbeiströmendes Partikel erzeugt. Die Gasgeschwindigkeit beträgt für das in Fig. 2 dargestellte Partikel 1000 mm/s. Wie in Fig. 2 dargestellt ist, erzeugt ein an den Einzelelektroden 101 a bis I vorbeiströmendes Partikel eine Reihe von Impulsen. Die Frequenz der Impulsfolge beträgt im vorliegenden Fall 1000 Hz.

Die Impulsstärke variiert mit der Höhe, in der die Einzelpartikel an den Einzelelektroden 101a bis 1 vorbeiströmen: Bei zunehmender Höhe der Einzelpartikel über den Einzelelektroden 101a bis I nimmt die Signalstärke ab. In Fig. 2 sind drei verschiedene Einzelpulssignale 111 bis 113 dargestellt, wobei das Einzelpulssignal 111 von einem in einer Höhe von 0,9 mm über den Einzelelektroden vorbeiströmendem Einzelpartikel erzeugt wurde; diese Höhe beträgt für das Einzelpulssignal 112 0,6 mm und für das Einzelpulssignal 113 0,3 mm. Die Signalstärke ist daher für das Einzelpulssignal 203 am größten, für das Einzelpulssignal 111 am kleinsten.

Die Frequenz f dieser Pulsfolgen ist dabei proportional zur Gasgeschwindigkeit sowie zum Abstand d der Einzelelektroden 101 a bis I. Bei einem Drahtabstand von d=1 mm und einer Frequenz von f=1000 Hz berechnet sich die Gasgeschwindigkeit zu v=1000 mm/s auf Basis der folgenden Formel:

$$v = f \cdot d$$

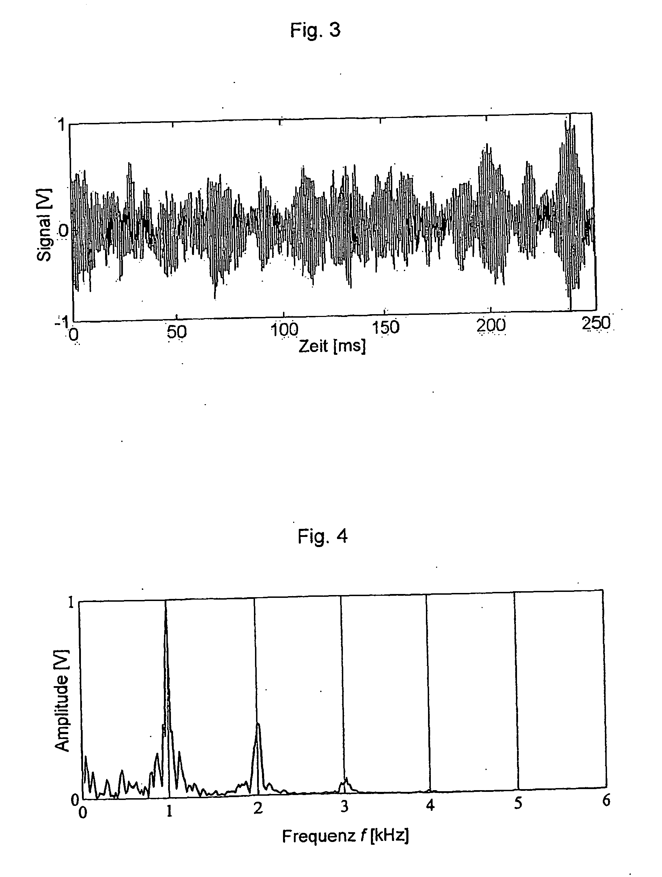

Fig. 3 zeigt ein überlagertes Messsignal nach einer Hochpassfilterung. Für das Messsignal wurden 10.000 der in Fig. 2 dargestellten Einzelsignale zufällig überlagert, wobei die Höhe der Einzelpartikel über der Elektrode zwischen 0,3 mm und 3 mm zufällig variiert wurde. Ein solches überlagertes Messsignal repräsentiert die Verhältnisse in einem Gasstrom näherungsweise, bei der eine Vielzahl von Einzelpartikeln in unterschiedlichem Abstand an der ersten Elektrodeneinheit vorbeiströmen.

Für die Frequenzanalyse ist insbesondere der Hochfrequenzanteil des Signals von Interesse, so dass zunächst eine Hochpassfilterung durchgeführt wurde, deren Ergebnis in Fig. 3 dargestellt ist. Die Hochpassfilterung hat den weiteren Vorteil, dass auf diese Weise auch Störsignale, wie etwa Netzbrummen, Plattenschwingungen, etc. reduziert werden.

Auch aus den überlagerten Impulsfolgen von Fig. 3 kann weiterhin die Geschwindigkeit der Partikel abgeleitet werden. Dazu wird vorzugsweise eine Frequenzanalyse durchgeführt zur Ermittlung der signifikanten Frequenz der Impulsfolgen.

Fig. 4 zeigt die signifikante Frequenz des überlagerten Messsignals aus Fig. 3 als Ergebnis der Frequenzanalyse des überlagerten Messsignals aus Fig. 3 nach einer Hochpassfilterung. Abstand d der Einzelelektroden beträgt 1 mm und die Grundfrequenz der Impulsfolge 1 kHz, so dass sich die Gasgeschwindigkeit zu 1000 mm/s ergibt.

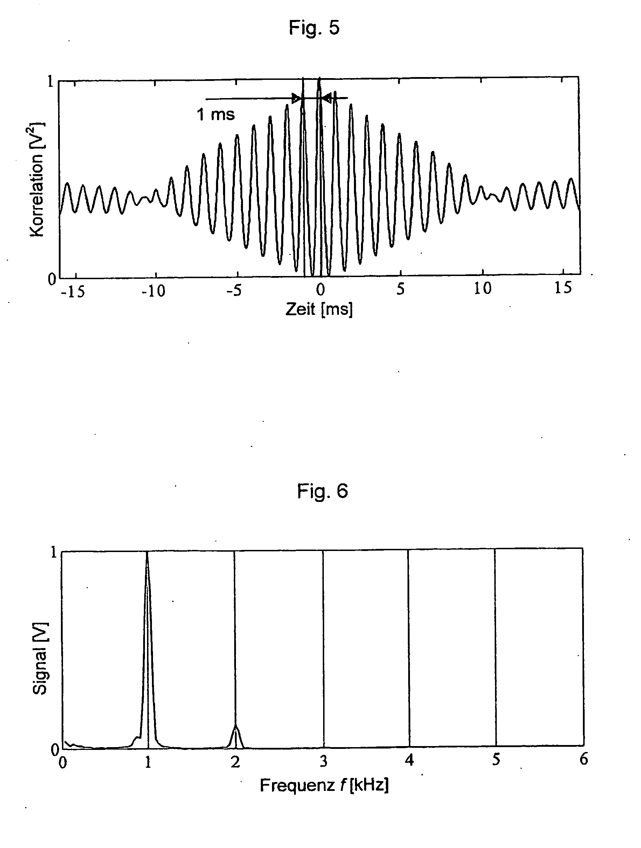

Mittels Autokorrelation kann die Analyse weiter verbessert werden. Das Ergebnis der Autokorrelation des überlagerten Messsignals aus Fig. 3 ist in Fig. 5 dargestellt. Eine analoge Autokorrelation ermöglicht es, durch Verfolgen des ersten Korrelationsmaximums ein kontinuierliches Geschwindigkeitssignal zu erzeugen. Dabei kann die Zeit, die ein Partikel benötigt, um von einer Einzelelektrode zur nächsten zu strömen, direkt abgelesen werden, wie in Fig. 5 dargestellt ist. Dadurch wird ein "Tracking", d.h. eine kontinuierliche Erfassung des ersten Maximums ermöglicht. Weiterhin ist die Analyse mittels der Autokorrelation sehr robust gegenüber Messrauschen.

Das Korrelationssignal aus Fig. 5 kann wiederum mittels Frequenzanalyse analysiert werden. Das Ergebnis einer solchen Frequenzanalyse ist in Fig. 6 dargestellt. Dieses in Fig. 6 dargestellte Ergebnis der Frequenzanalyse des Korrelationssignals aus Fig. 5 ist im Wesentlichen identisch mit der in Fig. 4 gezeigten direkten Frequenzanalyse des überlagerten Messsignals aus Fig. 3. Das Rauschen konnte im in Fig. 6 dargestellten Ergebnis jedoch deutlich reduziert werden.

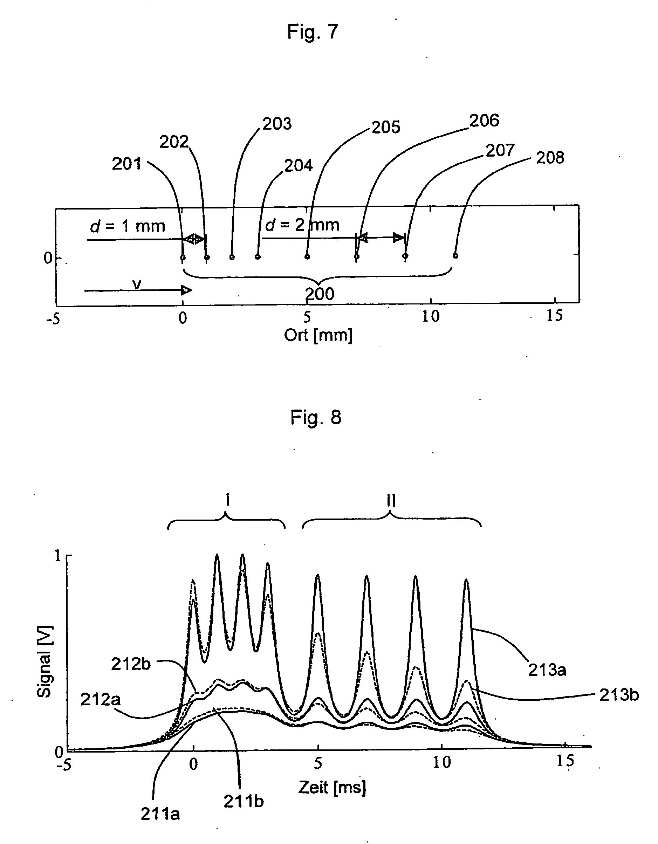

Fig. 7 zeigt einen Schnitt durch die Einzelelektroden 201 bis 208 einer alternativen Ausführungsform einer ersten Elektrodeneinheit, bei der die Einzelelektroden 201 bis 208 in einer ersten Gruppe 201 bis 204 und in einer zweiten Gruppe 205 bis 208 angeordnet sind. Alle Einzelelektroden 201 bis 208 sind wie auch in der in Fig. 1 gezeigten Ausführungsform der ersten Elektrodeneinheit parallel zueinander in einer Reihe angeordnet, wobei die Längsausrichtung der Einzelelektroden, die normal zur Schnittebene des in Fig. 7 dargestellten Schnittes verläuft, senkrecht zur Strömungsrichtung v des Gasstroms angeordnet ist und die Flucht bzw. Reihe der Einzelelektroden parallel zum Gasstrom v verläuft.

Im Gegensatz zu der in Fig. 1 dargestellten Ausführungsform der ersten Elektrodeneinheit sind die Einzelelektroden der in Fig. 7 dargestellten alternativen Ausführungsform der ersten Elektrodeneinheit 200 nicht äquidistant zueinander angeordnet. Die erste Gruppe von Einzelelektroden 201 bis 204 der Elektrodeneinheit ist in jeweils einem Abstand von 1 mm zueinander angeordnet, die zweite Gruppe von Einzelelektroden 205 bis 208 der Elektrodeneinheit 200 in jeweils einem Abstand von 2 mm zueinander. Dies führt dazu, wie beispielsweise in der folgenden Fig. 8 zu erkennen, dass die Impulsfrequenz der Partikel beim Passieren der ersten Gruppe von Einzelelektroden 201 bis 204 eine anderen ist als beim Passieren der zweiten Gruppe von Einzelelektroden 205 bis 208. Auf diese Weise kann die sich entlang der Einzelelektroden verändernde Signalstärke mittels einer Frequenzanalyse bestimmt werden, insbesondere indem über die jeweils zu erwartenden Frequenzbereiche ein Integral gebildet wird.

Wie in Fig. 8 zu erkennen ist, unterscheiden sich die durch an der ersten Gruppe von Einzelelektroden vorbeiströmende Partikel entstehenden Impulsfrequenzen im Bereich I (1000 Hz) von denen der durch an der ersten Gruppe von Einzelelektroden vorbeiströmende Partikel entstehenden Impulsfrequenzen im Bereich II (500 Hz). Durch die Anordnung der zweiten Gruppe von Einzelelektroden im gegenüber der ersten Gruppe verdoppelten Abstand voneinander bilden sich die entstehenden Frequenzen im Sinne einer Naturton- bzw. Oktavreihe aufeinander ab, was die spätere Analyse des Messsignals vereinfacht. Die Messsignale 211a, b, 212a, b und 213a, b repräsentieren jeweils ein in unterschiedlicher Höhe bzw. in unterschiedlichem Abstand an den Einzelelektroden vorbeiströmendes Partikel, ähnlich wie in Fig. 2. Der Abstand der Partikel 211a, b von den Einzelelektroden 201 bis 208 beträgt 0,9 mm, der der Partikel 212a, b 0,6 mm und der der Partikel 213a, b, 0,3 mm. Die gestrichelt dargestellten Signale 211b, 212b, 213b zeigen den Signalverlauf für Partikel, die von der Hochspannungselektrode angezogen werden und bei denen sich somit der Abstand zu den Einzelelektroden der Messelektrode vergrößert (starke Partikelbewegung). Die durchgezogen dargestellten Signale 211a, 212a, 213a geben den Signalverlauf bei konstantem Abstand von den Einzelelektroden der Messelektrode wieder (schwache Partikelbewegung). Die Gasgeschwindigkeit beträgt 1000 mm/s.

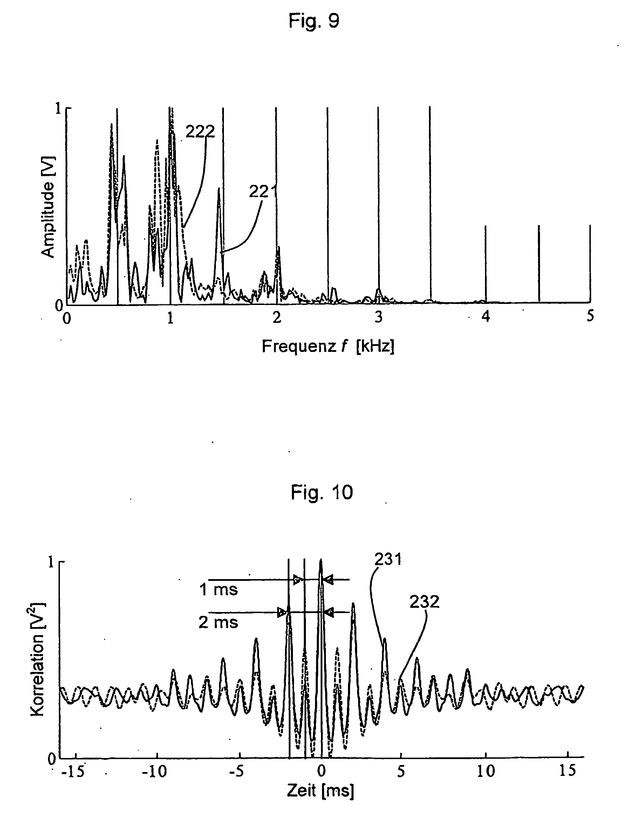

Fig. 9 stellt das Ergebnis einer Frequenzanalyse des überlagerten Sensorsignals aus Fig. 8 nach einer Hochpassfilterung dar. Entsprechend des Signals aus Fig. 8 beträgt die Gasgeschwindigkeit 1000 mm/s und betragen die Grundfrequenzen der Impulsfolge 500 Hz und 1000 Hz entlang der beiden Gruppen von Einzelelektroden. Die gestrichelte Linie 222 zeigt das Ergebnis für eine starke Partikelbewegung, die durchgezogene Linie 221 für eine schwache Partikelbewegung. Das veränderte Amplitudenverhältnis von 500 Hz zu 1000 Hz bei schwacher bzw. starker Partikelbewegung ist jedoch schwach ausgeprägt. Werden jedoch die Integrale der Frequenzbereiche 250 bis 750 Hz und 750 bis 1250 Hz miteinander verglichen, wird das Amplitudenverhältnis deutlich, so dass Rückschlüsse auf die Partikelbewegung entlang der beiden Gruppen der Einzelelektroden möglich sind.

In Fig. 10 ist das Korrelationssignal zum überlagerten Messsignal dargestellt. Wie in Fig. 10 zu erkennen ist, kann der Effekt der sich verändernden Amplitudenverhältnisse mit Hilfe der Autokorrelation noch deutlicher herausgearbeitet werden. Die gestrichelte Linie 232 zeigt das Ergebnis für eine starke Partikelbewegung, die durchgezogene Linie 231 für eine schwache Partikelbewegung. Durch die kontinuierliche Erfassung eines Maximums oder mehrerer Maxima ist ein "Tracking" möglich. Für die Bestimmung der Partikelgröße ist das Amplitudenverhältnis der ersten beiden Maxima von Interesse, da dieses die Veränderung des Messsignals entlang der Messelektrode wiedergibt und damit Rückschlüsse auf die Veränderung des Abstand von der ersten Elektrodeneinheit bzw. die Bewegungsstärke der Partikel und damit der Größe ermöglicht.

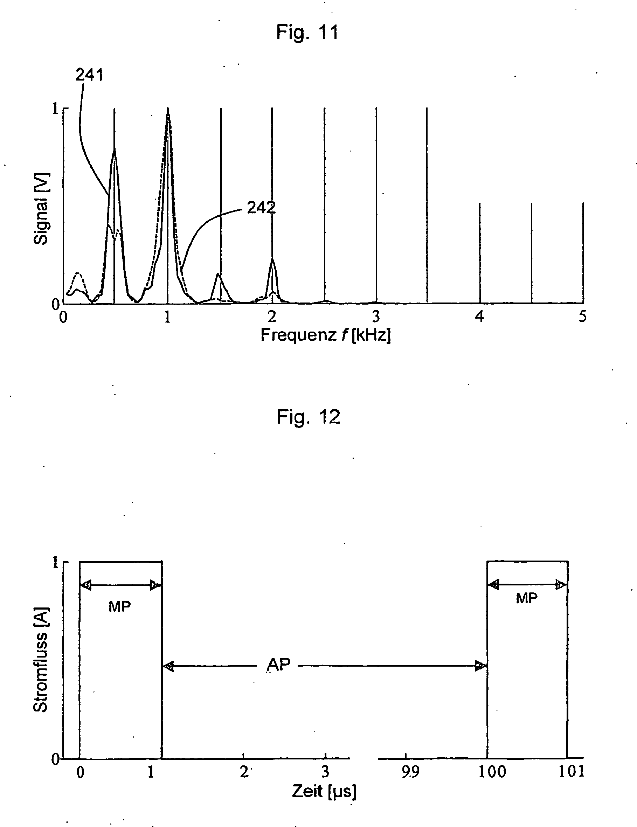

Fig. 11 stellt die Frequenzanalyse des Korrelationssignals dar. Die gestrichelte Linie 242 zeigt wieder das Ergebnis für eine starke Partikelbewegung, die durchgezogene Linie 241 für eine schwache Partikelbewegung. Das Ergebnis ist im wesentlichen identisch mit der direkten Frequenzanalyse des Messsignals. Die in Fig. 11 dargestellte Frequenzanalyse zeigt das Verhältnis der Amplituden entlang der beiden Einzelelektrodengruppen (bei 500 Hz und bei 1000 Hz) deutlich. Auch hier wird durch die Autokorrelation das Rauschen erheblich verringert.

Eine Bestimmung der Gasgeschwindigkeit, wie sie mit Bezug auf die in den Fig. 1 bis 6 gezeigte erste Ausführungsform der erfindungsgemäßen Sensorvorrichtung beschrieben ist, ist auch mit der hier mit Bezug auf die Figuren 7 bis 11 beschriebenen zweiten Ausführungsform der erfindungsgemäßen Sensorvorrichtung weiterhin möglich.

Alternativ oder zusätzlich zur Ausbildung der Elektrodeneinheit als zwei oder mehrere Einzelelektroden können auch mehrere Messelektroden verwendet werden, um Gasgeschwindigkeit und/oder Partikelgröße zu bestimmen. Insbesondere können auch die mit Bezug auf die in den Fig. 1 bis 6 gezeigte erste Ausführungsform der erfindungsgemäßen Sensorvorrichtung und die mit Bezug auf die Figuren 7 bis 11 beschriebene zweite Ausführungsform der erfindungsgemäßen Sensorvorrichtung miteinander kombiniert werden, um eine besonders vorteilhafte Ausführungsform der vorliegenden Erfindung zu realisieren.

Die Form der Partikel kann bevorzugt dadurch ermittelt werden, dass das zu vermessende Aerosol verdünnt wird und somit einzelne Partikel im Sensor untersucht werden können. Die Stärke des Sensor- bzw. Messsignals ist dabei abhängig von der Partikeloberflächengröße A, wohingegen die Partikelbewegung abhängig ist vom Verhältnis von der Oberflächengröße A zur Partikelmasse m. Die Dichte δ der Partikel wird als konstant betrachtet.

Wird der Abgasstrom durch zwei parallele Sensoren gelegt, wobei die Partikel bei einem Sensor zuvor z.B. mittels einer Koronaentladung elektrisch aufgeladen werden, so kann die Oberfläche, d.h. die Oberflächenverteilung, auch im unverdünnten Abgas durch Vergleich beider Sensorsignale gemessen werden. Die durch die Korona aufgezwungene elektrische Ladung der Partikel ist abhängig von deren Oberfläche. Die vom Verhältnis der Oberflächenladung zur Masse abhängige Partikelbewegung wird somit durch die Erhöhung der Oberflächenladung verstärkt.

Aus dem Vergleich von Partikeloberflächengröße zum Verhältnis Partikeloberflächengröße/Partikelmasse, auf die Partikelform geschlossen werden, die wird als sogenannte Fraktalität ausgegeben wird (siehe nachfolgende Tabelle 1).

Tabelle 1: Fraktalität von Partikeln und deren Bedeutung

| Fraktalität | Partikelform |
|---|---|
| 1 | Linienförmig |
| 2 | Flächenförmig |
| 3 | Kugelförmig |

Mit Hilfe der Fraktalität kann auf das Partikelvolumen V geschlossen werden.

Der folgenden Berechnung liegt die Annahme zugrunde, dass ein Partikel aus mehreren sogenannten Primärpartikeln der gleichen Größe, insbesondere mit einem Radius $r_p$ von 10-40 nm, besteht. Als Mittel wird ein Primärpartikelradius von $r_p$ = 25 nm angenommen. Die Dichte der Primärpartikel beträgt $\delta$ = 2 g/cm$^3$. Dabei ist folgender Zusammenhang zwischen Partikelradius r und Anzahl der Primärpartikel N über die Fraktalität F gegeben:

$$N = k \cdot \left( \frac{r}{r_P} \right)^F$$

Die Proportionalitätskonstante k muss durch Vergleichmessungen bestimmt werden.

Die Oberflächengröße der Partikel berechnet sich dabei wie folgt:

$$A = (F - 1) \cdot \pi \cdot r^2$$

Mit Hilfe des Oberflächengrößen-Masseverhältnisses E ,

$$E = \frac{A}{m}$$

der Dichte $\delta$

$$\delta = \frac{m}{V}$$

und der Partikeloberflächengröße A kann nun das Volumen V der Partikel berechnet werden:

$$V = \frac{1}{\delta} \cdot \frac{A}{E}$$

Da von einem konstanten Primärpartikelradius ausgegangen wird, kann die Anzahl dieser durch das Verhältnis der Volumen wie folgt berechnet werden:

$$N = \frac{V}{V_P} = \frac{3 \cdot V}{4\pi \cdot r_P^3}$$

Über die Anzahl N kann nun der Radius r und durch Umstellen folgender Gleichung bestimmt werden:

$$N = k \cdot \left( \frac{r}{r_P} \right)^{\frac{A}{\pi \cdot r^2 + 1}}$$

Nun kann auch die Fraktalität F berechnet werden:

$$F = \frac{A}{\pi \cdot r^2 + 1}$$

Beispiel Veränderung der gemessenen Werte bei unterschiedlicher Fraktalität:

Im Folgenden wird die Veränderung der gemessenen Werte bei unterschiedlicher Fraktalität dargestellt. Es wird angenommen, ein Partikel habe Masse m=1 ng und eine Radius von r=1 nm. Dadurch ergeben sich für verschiedene Partikelformen folgende Werte (Tabelle 2):

Tabelle 2: Verhältnis von Oberflächengröße zu Masse bei verschiedenen Fraktalitäten

| Fraktalität | F = 1.1 | F = 2 | F = 3 |
|---|---|---|---|
| Oberflächengröße | $A = (F - 1) \cdot \pi \cdot \gamma^2 = 0{,}314 \text{ nm}^2$ | $A = (F - 1) \cdot \pi \cdot \gamma^2 = 3{,}14 \text{ nm}^2$ | $A = (F - 1) \cdot \pi \cdot \gamma^2 = 12{,}6 \text{ nm}^2$ |
| Verhältnis: Oberflächengröße zu Masse | $E = \dfrac{A}{m}$ $= \dfrac{0{,}314 \text{ nm}^2}{1 \text{ ng}}$ $= 0{,}314 \dfrac{\text{nm}^2}{\text{ng}}$ | $E = \dfrac{A}{m}$ $= \dfrac{12{,}6 \text{ nm}^2}{1 \text{ ng}}$ $= 12{,}6 \dfrac{\text{nm}^2}{\text{ng}}$ | $E = \dfrac{A}{m}$ $= \dfrac{12{,}6 \text{ nm}^2}{1 \text{ ng}}$ $= 12{,}6 \dfrac{\text{nm}^2}{\text{ng}}$ |

Fig. 12 zeigt das Prinzip der erfindungsgemäßen gepulsten Ohmschen Widerstandsmessung.

Die Erwärmung eines Widerstands bzw. eines Hitzdrahts ist abhängig vom mittleren Stromfluss. Erfindungsgemäß wird daher der Strom wie folgt gepulst: Während des eingeschalteten Stromes wird der Widerstandswert gemessen (Messphase). Diese Messung kann sehr schnell erfolgen (Größenordnung $1\mu$s). Der gemessene Wert wird dann als Ausgabewert gehalten. Die Abkühlphase AP wird sehr viel länger gewählt als die jeweiligen Messphasen MP. Beträgt die Abkühlphase AP z.B. das Hundertfache der Messphase MP (d.h. AP=100$\mu$s=1ms), so kann der Stromfluss während der Messung in der Messphase MP auch 100 mal stärker sein als bei einer kontinuierlichen Bestromung. Dies führt auch zu einer hundertfach genaueren Widerstandmessung, wodurch eine sehr genaue Temperaturmessung auch mit kleinen Widerstandwerten möglich wird. auf diese Weise können Drähte mit einen wesentlich geringeren Widerstand (Größenordnung 0,1 Ohm) zur Temperaturmessung verwendet werden. Widerstände dieser Größenordnung konnten bisher nur für die Massenstrommessung eingesetzt werden konnten, nicht jedoch für die Temperaturmessung, für die sich in der Praxis Platinwiderstande von 100 bis 1000 Ohm bei 0°C durchgesetzt hatten.

Intensität und Dauer der Bestromung während der Messphase können abgeschätzt werden, indem berechnet wird, welche Wärmemenge der Draht durch Strahlung, Leitung und Konvektion abgeben kann und der Messstrompuls derart gewählt wird, dass diese Wärmeabgabekapazität nicht überschritten wird. Die entsprechenden Parameter können ergänzend oder alternativ auch im Versuch ermittelt werden.

Im Folgenden wird beispielhaft dargestellt, wie die Stromstärke eines Strompulses für einen Hitzdraht einer erfindungsgemäßen Sensorvorrichtung zur Bestimmung der Temperatur eines Gasstroms abgeschätzt werden kann.

Um die Erwärmung des Hitzdrahts in Folge des Stromflusses abzuschätzen, ist zunächst die Wärmekapazität des Hitzdrahts - hier aus Platin - zu bestimmen:

$$c_{Draht} = \delta_{Platin} \cdot l \cdot \frac{\pi}{4} \cdot d^2 \cdot \chi_{Platin}$$

Erfindungsgemäß wird der Stromfluss für den zur Temperaturmessung eingesetzten Hitzdraht gepulst, um eine zu starke Erwärmung zu vermeiden. Ein Pulsbreitenverhältnis von 1:101 ist dabei bevorzugt, wobei der Strom für eine Einschaltdauer $t_{on} = 1 \cdot 10^{-6}$ *s* eingeschaltet wird. Dabei handelt es sich um die kürzeste Einschaltdauer, die im Versuch mit dem Timer NE555 realisiert wurde. Die Temperaturerhöhung während dieser Einschaltdauer soll $\Delta T_T = 0,1°C$ nicht übersteigen, da ansonsten die Genauigkeit der Messung negativ beeinflusst werden kann. Die während dieser Einschaltdauer abgegebene Wärme durch Konvektion und Strahlung wird im vorliegenden Beispiel vernachlässigt. Die maximale Stromstärke $I_{Ton}$ in Abhängigkeit des Drahtwiderstandes $R_T$ kann somit wie folgt berechnet werden:

$$\frac{I_{Ton}^{\,2} \cdot R_T}{c_{Draht}} \cdot t_{on} = \Delta T_T$$

$$I_{Ton} = \sqrt{\frac{c_{Draht}}{R_T \cdot t_{on}} \cdot \Delta T_T}$$

Im Folgenden wird die abgegebene Wärmestrahlung mit Hilfe des Stefan-Boltzmann-Gesetzes und des Emissionsgrades für Platin $\varepsilon_{Platin} = 0,05$ wie folgt berechnet:

$$P_{Strahlung} = \varepsilon_{Platin} \cdot 5,6704 \cdot 10^{-8}\ \frac{W}{m^2 \cdot K^4} \cdot \pi \cdot d \cdot l \cdot \Delta T_T^{\,4}$$

Wärme wird zusätzlich durch Wärmeleitung an die Drahtbefestigung abgegeben, deren Temperatur hier als konstant angenommen wird. Weiterhin wird angenommen, dass die gesamte Wärme durch die halbe Drahtlänge zu fließen hat. Die so abgegebene Wärmeleistung kann wie folgt berechnet werden:

$$P_{Leitung} = 2 \cdot \lambda_{Platin} \cdot \frac{\pi}{4} \cdot d^2 \cdot \frac{1}{l} \cdot \Delta T_T$$

Für einen Platindraht mit einer Länge l von $10 \cdot 10^{-3}$ m und einer Durchmesser d von $0,1 \cdot 10^{-3}$ m und unter Vernachlässigung der Konvektion wird die Wärmeabgabe durch die Wärmeleitung bestimmend gegenüber der Wärmeabgabe durch Wärmestrahlung. Die durch den Messstrom in den Draht eingebrachte Leistung soll diese Wärmeabgableitung durch Wärmeleitung nicht übersteigen. Damit ergibt sich der mittlere Strom $\overline{I_T}$ wie folgt:

$$\overline{I_T}^{\,2} \cdot R_{T(800°C)} = P_{Leitung}$$

Aufgrund der zahlreichen Näherungen wird für den zulässigen mittleren Strom der berechnete mittlere Strom noch mit einem Sicherheitsfaktor von 1/10 multipliziert.

Durch die gepulste Widerstandsmessung kann der Impulsstrom $I_{Ton}$ somit wie folgt abgeschätzt werden:

$$I_{Ton} = \frac{1}{10} \cdot \frac{101}{1} \cdot \sqrt{\frac{P_{Leitung}}{R_{T(800°C)}}}$$

Diese beispielhafte, rechnerische Abschätzung stellt im Wesentlichen eine untere Grenze dar, da die Wärmeabgabe durch Konvektion nicht berücksichtigt wurde. Der zu erwartende Wärmestrom durch Luftstrom dürfte deutlich größer sein als der durch Wärmeleitung, da für die Konvektion die gesamte Oberfläche des Hitzdrahts zur Wärmeübertragung zu Verfügung steht, welche wesentlich größer ist als die Querschnittsfläche des Hitzdrahts.

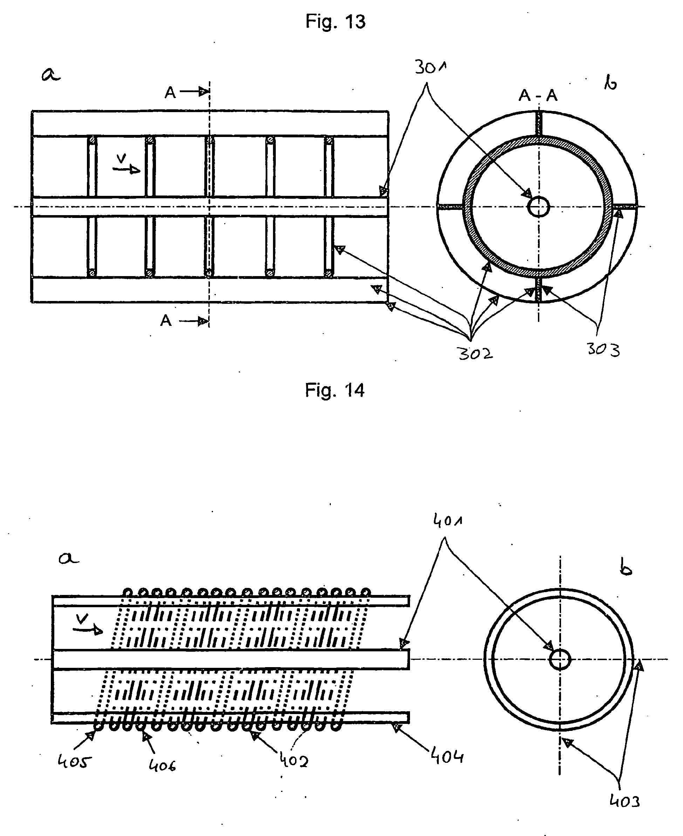

Fig. 13a, b zeigt beispielhaft eine koaxiale Ausführung einer erfindungsgemäßen Sensorvorrichtung. Hierbei wird die Messelektrode 302 in ein koaxiales Rohr eingeschoben, in dem auch die Hochspannungselektrode 301 angeordnet ist. Die Gasströmungsrichtung ist mit dem Pfeil v bezeichnet. Dabei werden die Drähte mittels Abstandshalter 303 von der Rohrwand auf Abstand gehalten, um Feldverzerrungen zu erzeugen. Das Rohr und die Abstandhalter sind Bestandteil der Messelektrode. Durch diese Anordnung ist ein Freiheizen nicht nötig, so dass keine Einbettung der Messelektrode 302 erfolgt, da die Folgen der Ablagerungen durch das Rohr bereits vorweggenommen sind.

Fig. 14a, b zeigt eine Möglichkeit einer beheizten Messelektrode 402 einer erfindungsgemäßen Sensorvorrichtung, ebenfalls in einer koaxialen Ausführung mit Hochspannungselektrode 401. Die Gasströmungsrichtung ist mit dem Pfeil v bezeichnet. Bei dieser Anordnung wird die Messelektrode 402 (in Fig. 14 mit unterbrochenen Linien dargestellt) auf ein isolierendes Rohr 404 (z.B. Quarzglas) aufgewickelt. In diesem Fall ist die Messelektrode 402 beheizt. Zu diesem Zweck werden mehrere parallele Wicklungen aufgebracht, die abwechselnd als Heizung 405 (in Fig. 14 mit gepunkteten Linien dargestellt) oder als Abschirmung 406 (in Fig. 14 mit Strichpunktlinien dargestellt) dienen. Die Abschirmung dient dazu, die freiwerdenden Ionen abzuführen und einem verminderten Widerstand des Isolators aufgrund der Erhitzung entgegenzuwirken.

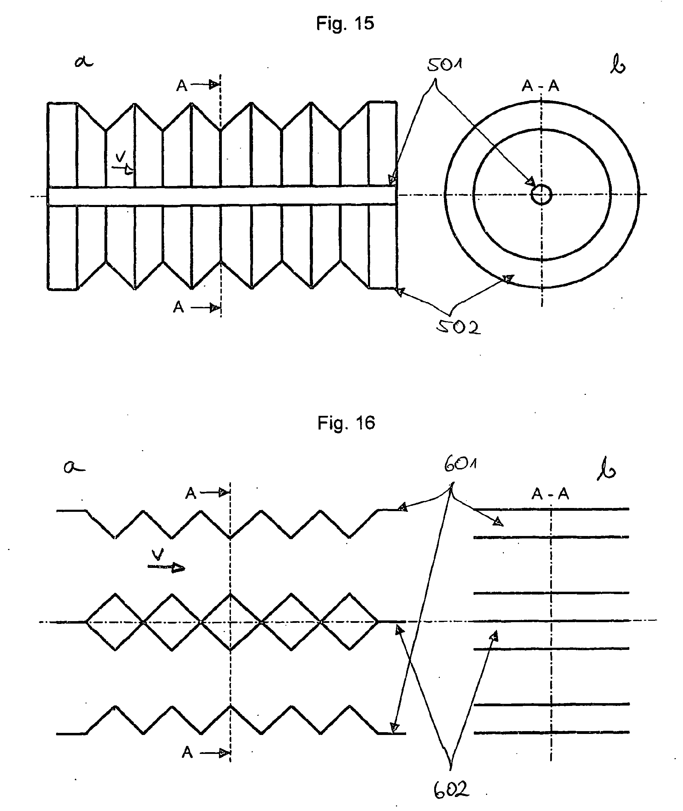

Fig. 15a, b zeigt beispielhaft eine weitere koaxiale Ausführung einer erfindungsgemäßen Sensorvorrichtung. Die Gasströmungsrichtung ist mit dem Pfeil v bezeichnet. Hierbei besteht die Messelektrode 502 aus einem Stück Wellrohr. Durch den unterschiedlichen Abstand zur Hochspannungselektrode 501 ergeben sich die benötigten Feldverzerrungen.

Fig. 16a, b zeigt beispielhaft eine erfindungsgemäße Sensorvorrichtung in einer flächigen Ausführung mit strukturierter Hochspannungs- (601) und Messelektrode (602). Die Gasströmungsrichtung ist mit dem Pfeil v bezeichnet.

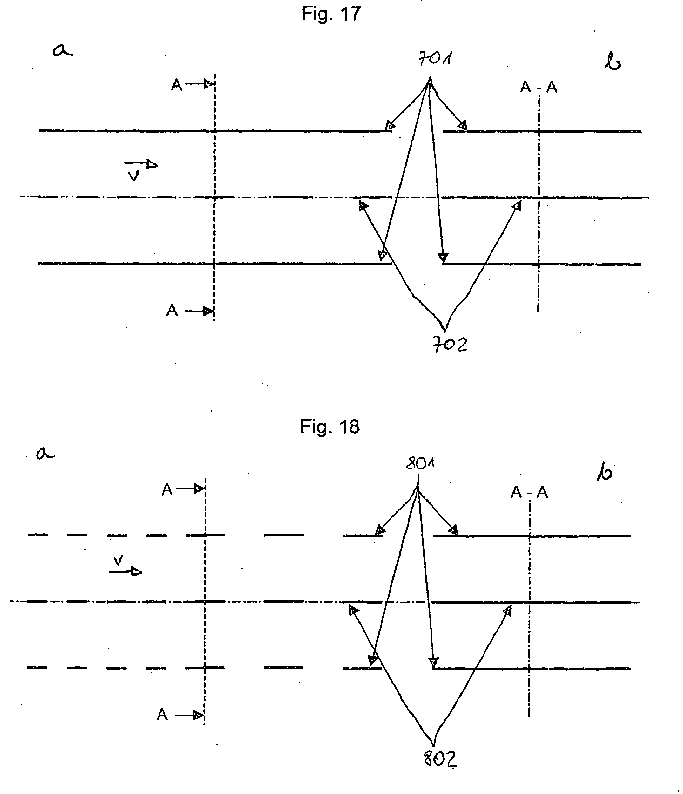

Fig. 17a, b zeigt beispielhaft eine erfindungsgemäße Sensorvorrichtung in einer Ausführung als Plattenkondensator mit Hochspannungs- 701 und Messelektrode 702. Die Gasströmungsrichtung ist mit dem Pfeil v bezeichnet. Hier wurde anstelle der beispielsweise in Fig. 1 gezeigten Drähte die Messelektrode 702 aus Plattenabschnitten hergestellt. Dies ist insbesondere vorteilhaft, um noch stärkere Feldverzerrungen zu erreichen.

Fig. 18a, b zeigt beispielhaft eine weitere erfindungsgemäße Sensorvorrichtung ebenfalls in einer Ausführung als Plattenkondensator mit Hochspannungs- 801 und Messelektrode 802. Die Gasströmungsrichtung ist mit dem Pfeil v bezeichnet. Die Messelektrode 802 ist aus Plattenabschnitten hergestellt, um stärkere Feldverzerrungen zu erreichen. Zusätzlich ist in dieser Ausführungsform auch die Hochspannungselektrode 801 strukturiert, d.h. aus Abschnitten gefertigt, wodurch die Feldverzerrungen in vorteilhafter Weise weiter verstärkt werden können.

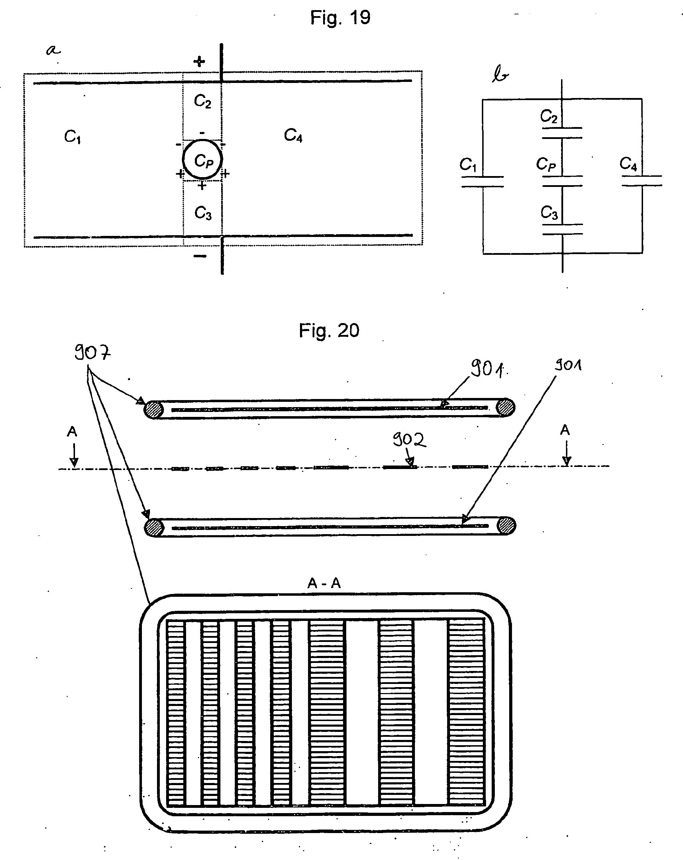

Fig. 19a zeigt eine Messanordnung, bei der die Partikelkapazität $C_P$ dargestellt ist. Die Partikel verhalten sich in dieser Messanordnung wie in Reihe geschaltete Kapazitäten, wie Fig. 19b zu entnehmen ist, die einen Ersatzschaltplan für die in Fig. 19a dargestellte Messanordnung zeigt.

Fig. 20 zeigt eine flächige Ausführung einer erfindungsgemäßen Sensorvorrichtung mit einer Hochspannungselektrode 901 und einer strukturierten Messelektrode 902. Gemessen wird der Ladungsstrom. Parallel wird in diesem Ausführungsbeispiel mit Hilfe der Messspule 907 die induktive Wirkung der Ausgleichsströme innerhalb der Partikel vermessen.

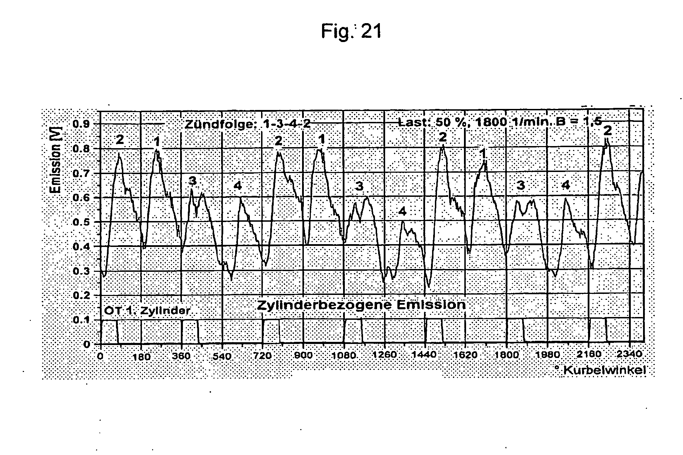

Fig. 21 zeigt Messergebnisse der Anwendung einer erfindungsgemäßen Sensorvorrichtung, die direkt hinter dem Abgaskrümmer eines Verbrennungsmotors angeordnet ist. Dargestellt ist die zylinderbezogene Emission [V] bei einer Zündfolge 1-3-4-2, Last 50%, 1800 1/min, B = 1,5.

Wie in Fig. 21 zu erkennen ist, erlaubt die erfindungsgemäße Sensorvorrichtung eine Differenzierung nach den einzelnen Zylindern, so dass aufgrund der Messergebnisse eine Steuerung der Kraftstoffzufuhr, beispielsweise über Einspritzwinkel, -menge und/oder -zeit ermöglicht wird.

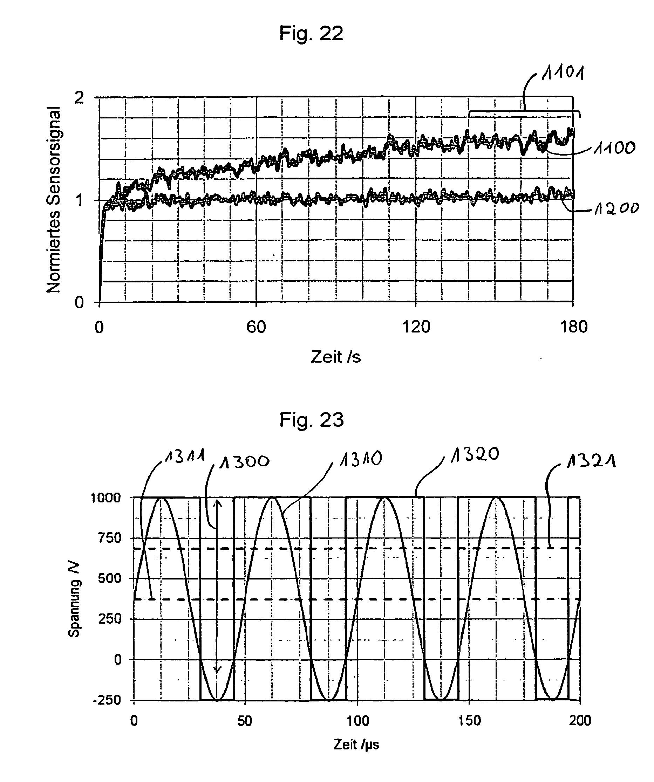

In Fig. 22 ist dargestellt, welche Wirkung eine erfindungsgemäße Ablagerungskontrolle durch modulierte Hochspannung und/oder durch die Erhitzung der Elektrodeneinheiten und/oder der Partikel haben kann. In der Grafik ist das normierte Sensorsignal über die Zeit (in Sekunden) aufgetragen; einmal für eine Sensorvorrichtung mit konstanter Hochspannung 1100 und einmal für eine Sensorvorrichtung mit modulierter Hochspannung 1200 mit einer Modulationstiefe von 125% bezogen auf die maximale Spannung. Die Sensorvorrichtung mit modulierter Hochspannung 1200 liefert direkt nach Messaufnahme ein stabiles Messsignal. Ohne modulierte Hochspannung, d.h. mit konstanter Hochspannung, erreicht das generierte Messsignal erst nach ca. 140s einen Gleichgewichtszustand 1101 und ist damit gegenüber dem Messsignal der Sensorvorrichtung mit modulierter Hochspannung deutlich verzögert. Die Verbesserung des Zeitverhaltens der Sensorvorrichtung wird dadurch erreicht, dass die Modulation der Hochspannung die Ablagerungen von Partikeln verhindert bzw. deutlich reduziert. Durch Partikelablagerungen verursachte Signalverzögerungen können somit beseitigt bzw. verringert werden.

Der durch die Modulation der Hochspannung auf die Messelektrode kapazitiv übertragene Wechselstromanteil wird in einem Messverstärker der Messeinheit eingangsseitig gefiltert. Dies ist möglich, da ein induktiv oder kapazitiv übertragener Wechselstromanteil galvanisch getrennt ist und kein Gleichstromanteil vorhanden ist. Daher wird die eigentliche Messung im pA-Bereich, unter der Voraussetzung, dass der Wechselstromanteil ausreichend hochfrequent ist, nicht gestört.

Fig. 23 zeit eine bevorzugte Kurvenform eines Wechselstromanteils für die in Fig. 22 illustrierte Ablagerungskontrolle durch modulierte Hochspannung 1200 in einer erfindungsgemäßen Sensorvorrichtung. In Fig. 23 ist einerseits ein sinusförmiger Wechselstromanteil 1310 mit einer Amplitude 1300 von 1250V und einer mittleren Spannung 1311 von 375V dargestellt. Demgegenüber bevorzugt ist eine Rechteckspannung 1320 mit der gleichen Amplitude 1300 von 1250V und einer mittleren Spannung 1321 von 650 V und einem Pulsbreitenverhältnis von 3:1. Die Modulationstiefe beträgt 125% bezogen auf die maximale Spannung. In Fig. 23 beträgt die Frequenz 20kHz. Die optimierte Kurvenform 1320 führt zu einer gegenüber der sinusförmigen Modulation 1310 reduzierten Partikelablagerung und erzeugt ein um den Faktor 2,7 erhöhtes Messsignal. Die Verwendung einer Rechteckspannung 1320 hat gegenüber einem sinusförmigen Wechselstromanteil weiterhin den Vorteil, dass die Empfindlichkeit der Sensorvorrichtung weniger stark reduziert wird.

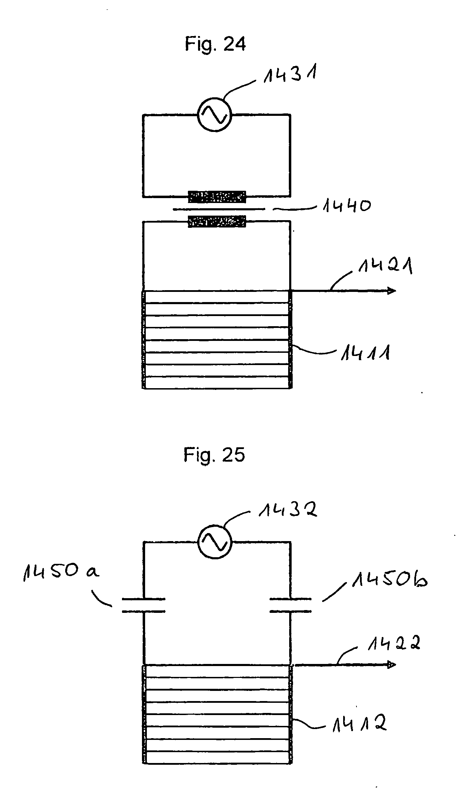

Die Fig. 24 bis 26 zeigen verschiedene erfindungsgemäße Möglichkeiten der Erwärmung von Elektrodeneinheiten. Vorzugsweise wird eine Elektrodeneinheit auf eine Temperatur oberhalb des Gasstroms, jedoch unterhalb der Zerstörungstemperatur der Partikel erwärmt. Auf diese Weise ist es möglich, einen Partikelstrom weg von der Elektrodeneinheit zu erzeugen und Ablagerungen an der Elektrodeneinheit zu vermeiden bzw. zu reduzieren. Auf diese Weise wird einerseits schneller ein Messsignal generiert als dies bei einer Elektrodeneinheit mit Ablagerungen der Fall ist, da die Zeiten zur Bildung eines Gleichgewichtszustands der Ablagerunen entfallen. Andererseits muss die Elektrodeneinheit nicht oder zumindest deutlich seltener freigebrannt werden, wodurch Ausfallzeiten reduziert bzw. vermieden werden können.

Die Fig. 24 und 25 zeigen jeweils eine als gitterförmige Messelektrode ausgebildete Elektrodeneinheit 1411, 1412 mit mehreren Messdrähten, die durch direkte Bestromung erhitzt werden können. Eine direkte Verwendung der ersten und/oder zweiten Elektrodeneinheit, insbesondere der Messelektrode, ist möglich, da galvanisch getrennte Wechselströme im Eingangsbereich eines Messverstärkers der Messeinheit gefiltert werden können. Die Messelektroden 1411, 1412 weisen jeweils einen Ausgang 1421, 1422 zu einem Messverstärker (nicht dargestellt) auf. Beide Messelektroden 1411, 1412 werden mit einer hochfrequenten Wechselspannung 1431, 1432 bestromt. Soll nur der Reinigungseffekt durch Verhinderung von Partikelablagerungen genutzt werden, ist eine Frequenz von vorzugsweise ca. 20kHz ausreichend. Soll zusätzlich z.B. die Geschwindigkeit mit Hilfe einer strukturierten Elektrode, beispielsweise einer Drahtgitterelektrode mit unterschiedlichem Drahtabstand, ermittelt werden, so ist eine deutlich höhere Frequenz erforderlich, vorzugsweise eine Frequenz von ca. 500kHz. Die Übertragung des für die Erwärmung erforderlichen Stroms erfolgt bei der Messelektrode 1411 in Fig. 24 induktiv über einen Transformator 1440 und bei der Messelektrode 1422 in Fig. 25 kapazitiv über Kondensatoren 1450a, b.

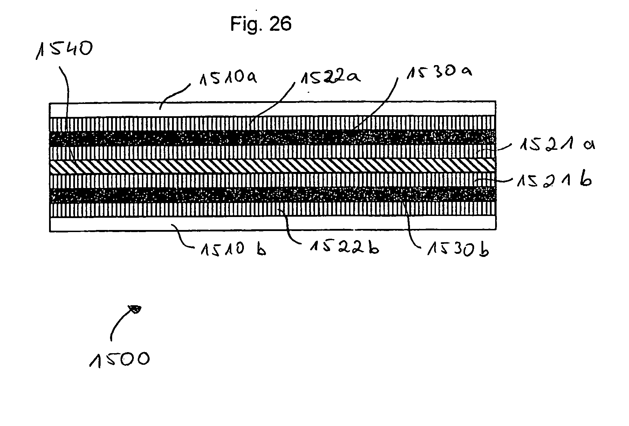

Fig. 26 zeigt eine Messelektrode 1500 einer erfindungsgemäßen Sensorvorrichtung mit indirekter Beheizung im Schnitt. Die Messelektrode 1500 weist ein zentral innerhalb der Messelektrode 1510 angeordnetes Heizelement 1540 auf. Das Heizelement 1540 ist durch eine Isolation 1521 von der Messelektrode 1510 getrennt. Optional ist noch eine Abschirmung 1530 vorgesehen, die wiederum durch eine Isolation 1522 von der Messelektrode 1510 getrennt ist. Die optionale Abschirmung 1530 verhindert eine Übertragung des Stroms vom Heizelement 1540 auf die Messelektrode 1510. Durch die Schnittdarstellung in Fig. 26 sind jeweils zwei Abschnitte a, b von Messelektrode 1510, Isolationsmaterial 1521, 1522 und Abschirmung 1530 dargestellt. Vorteilhaft an dieser Ausgestaltung der Messelektrode 1500 ist, dass der Strom für das Heizelement 1540 direkt zugeführt werden kann.

Weitere bevorzugte Ausführungsformen werden im Folgenden dargestellt:

Sensorvorrichtung zur Detektion von in einem Gasstrom enthaltenen elektrisch leitenden und/oder elektrisch geladenen Partikeln, insbesondere Rußpartikeln im Abgasstrom eines Dieselmotors, umfassend zumindest eine sich in einer Längsrichtung erstreckende erste und eine zweite Elektrodeneinheit, wobei vorzugsweise zumindest die erste Elektrodeneinheit (100) in dem Gasstrom angeordnet werden kann, **dadurch gekennzeichnet, dass** zumindest eine der Elektrodeneinheiten, vorzugsweise die erste Elektrodeneinheit oder beide Elektrodeneinheiten, für ein sich in Erstreckungsrichtung entlang der Elektrodeneinheit bewegendes Partikel zumindest zwei, vorzugsweise mehrere, diskrete Erfassungsbereiche zum Erfassen eines Partikels aufweist bzw. aufweisen, die entlang der Erstreckungsrichtung der Elektrodeneinheit voneinander beabstandet sind.

Es ist bevorzugt, dass die erste Elektrodeneinheit (100) zumindest zwei, vorzugsweise mehrere, Einzelelektroden (101a-l) aufweist.

Die Sensorvorrichtung ist vorzugsweise gekennzeichnet durch eine Messeinheit, die elektrisch mit den zumindest zwei Elektrodeneinheiten gekoppelt und ausgebildet ist, ein Messsignal zu generieren, und eine Auswerteeinheit, die ausgebildet ist, aus dem Messsignal eine Strömungsgeschwindigkeit der Partikel und/oder eine Größe der Partikel zu bestimmen.

Es ist bevorzugt, dass die Messeinheit ausgebildet ist, um das Messsignal als zumindest eine Folge von differenzierten Einzelpulssignalen (111, 112, 113) zu bilden.

Es ist bevorzugt, dass die Messeinheit ausgebildet ist, um die Einzelpulssignale (111, 112, 113) aus Ladungsströmen zu bilden, die durch zumindest ein, vorzugsweise genau ein, an den Einzelelektroden (101a-l) der ersten Elektrodeneinheit (100) vorbeiströmendes Partikel erzeugt werden.

Es ist bevorzugt, dass die Auswerteeinheit ausgebildet ist, um eine Frequenz der Folge von differenzierten Einzelpulssignalen zu bestimmen.

Es ist bevorzugt, dass die Auswerteeinheit ausgebildet ist, um aus überlagerten Erfassungen einer Vielzahl vorbeiströmender Partikel eine signifikante Frequenz der Folgen von differenzierten Einzelpulssignalen zu bestimmen.

Es ist bevorzugt, dass die Auswerteeinheit ausgebildet ist, um aus überlagerten Erfassungen einer Vielzahl vorbeiströmender Partikel anhand einer Analyse der dadurch erzeugten Folgen von differenzierten Einzelpulssignalen das Messsignal zumindest eines Einzelpartikels zu identifizieren, insbesondere indem eine signifikante Frequenz der Folgen von differenzierten Einzelpulssignalen bestimmt wird.

Es ist bevorzugt, dass die Einzelelektroden (101a-l) in einer Reihe angeordnet sind.

Es ist bevorzugt, dass die Auswerteeinheit ausgebildet ist, um die Strömungsgeschwindigkeit zumindest eines Partikels, vorzugsweise mehrerer Partikel, aus einem Abstand zwischen den Einzelelektroden (101a-l) und der Frequenz der Folge/n von differenzierten Einzelpulssignalen zu bestimmen.

Es ist bevorzugt, dass die Auswerteeinheit ausgebildet ist, um eine Veränderung des Abstands der Partikel von der ersten Elektrodeneinheit quer zur Erstreckungsrichtung der ersten Elektrodeneinheit (100) und/oder eine Änderung der Stärke des Messsignals eines Partikels zwischen zumindest zwei, vorzugsweise mehreren, der Einzelelektroden (101a-l) zu bestimmen.

Es ist bevorzugt, dass die Einzelelektroden (201-208) eine erste und eine zweite Gruppe von Einzelelektroden umfassen und die Auswerteeinheit ausgebildet ist, die Signale der ersten Gruppe (201-204) von Einzelelektroden getrennt von den Signalen der zweiten Gruppe (205-208) von Einzelelektroden auszuwerten.

Es ist bevorzugt, dass die Einzelelektroden (101a-l) äquidistant zueinander angeordnet sind.

Es ist bevorzugt, dass die Einzelelektroden der ersten Gruppe (201-208) einen anderen Abstand in Erstreckungsrichtung der Elektrodeneinheit zueinander aufweisen als die Einzelelektroden der zweite Gruppe (205-208), wobei vorzugsweise die Einzelelektroden der ersten Gruppe benachbart zueinander angeordnet und vorzugsweise die Einzelelektroden der zweiten Gruppe benachbart zueinander angeordnet sind.

Es ist bevorzugt, dass der Abstand der Einzelelektroden der zweiten Gruppe (205-208) in Erstreckungsrichtung der Elektrodeneinheit zueinander ein Vielfaches, vorzugsweise das Doppelte, des Abstands der Einzelelektroden in Erstreckungsrichtung der Elektrodeneinheit zueinander der ersten Gruppe (201-204) beträgt.

Es ist bevorzugt, dass die Auswerteeinheit ausgebildet ist, um die Änderung der Stärke des Messsignals eines Partikels zwischen den Einzelelektroden der ersten Gruppe (201-204) und den Einzelelektroden der zweiten Gruppe (205-208) zu bestimmen.

Es ist bevorzugt, dass die Auswerteeinheit ausgebildet ist, um aus der Änderung der Stärke des Messsignals ein Maß für die Veränderung des Abstands der Partikel von der ersten Elektrodeneinheit quer zur Erstreckungsrichtung der ersten Elektrodeneinheit (100, 200) abzuleiten.

Es ist bevorzugt, dass die Auswerteeinheit ausgebildet ist, um aus der Veränderung des Abstands der Partikel von der ersten Elektrodeneinheit (100, 200) und/oder der Änderung der Stärke des Messsignals ein Maß für die Größe der Partikel abzuleiten.

Es ist bevorzugt, dass die Auswerteeinheit ausgebildet ist, um aus einem mit dem Verhältnis von Oberflächengröße zu Masse der Partikel korrelierenden Signal ein Maß für die Größe der Partikel abzuleiten.

Es ist bevorzugt, dass die Auswerteeinheit ausgebildet ist, um ein Maß für eine Fraktalität und/oder ein Volumen und/oder eine Form des Partikels abzuleiten.

Es ist bevorzugt, dass die Auswerteeinheit ausgebildet ist, um ein mit dem Verhältnis von Oberflächengröße zu Masse eines Partikels korrelierendes Signal mit einem mit einer Oberflächengröße und/oder einer Masse des Partikels korrelierenden Signal zu vergleichen.

Es ist bevorzugt, dass die Auswerteeinheit ausgebildet ist, ein Maß für die Oberflächengröße des Partikels und/oder Masse des Partikels aus der Stärke des Messsignals abzuleiten.

Es ist bevorzugt, dass zumindest eine der Elektrodeneinheiten (301, 302, 401, 402, 501, 502, 601, 602, 701, 702, 801, 802, 901, 902) zumindest abschnittsweise, vorzugsweise im Bereich aller Erfassungsbereiche, in ein elektrisch nichtleitendes Material eingebettet ist.

Es ist bevorzugt, dass die Sensorvorrichtung zumindest abschnittsweise, insbesondere zumindest eine oder beide Elektrodeneinheiten (301, 302, 401, 402, 501, 502, 601, 602, 701, 702, 801, 802, 901, 902) zumindest abschnittsweise, vorzugsweise im Bereich aller Erfassungsbereiche, für die oder während der Messung auf eine Temperatur oberhalb der Temperatur des Gasstroms und vorzugsweise unterhalb einer Zerstörungstemperatur der Partikel aufheizbar ist bzw. sind.

Sensorvorrichtung nach einer der vorhergehenden Ausführungsformen oder dem Oberbegriff der ersten Ausführungsform, **dadurch gekennzeichnet, dass** die Messeinheit ausgebildet ist, um Partikel über eine Erfassung elektromagnetischer Strahlung, die von den Partikeln abgegeben wird, und/oder eine Erfassung eines durch die Partikel induzierten Stromflusses und/oder eine Erfassung der Kapazitäten der Partikel zu detektieren.

Sensorvorrichtung zur Bestimmung der Temperatur eines Gasstroms, insbesondere eines Abgasstroms eines Dieselmotors, umfassend einen Hitzdraht, der so angeordnet ist, dass er in dem Gasstrom platzierbar ist, und eine Steuereinheit, die ausgebildet ist, die Temperatur des Gasstroms durch eine Messung des ohmschen Widerstands des Hitzdrahts zu ermitteln, **dadurch gekennzeichnet, dass** die Steuereinheit ausgebildet ist, um den Hitzdraht zur Messung des ohmschen Widerstands mit einem gepulsten Messstrom anzusteuern.

Es ist bevorzugt, dass Stärke und/oder Zeitdauer der Strompulse und/oder die Zeitdauer zwischen aufeinanderfolgenden Strompulsen derart gewählt ist bzw. sind, dass die Erwärmung des Hitzdrahts einen vorgegebenen Grenzwert von vorzugsweise 0,1K und/oder das, insbesondere durch Wärmeleitung und/oder Wärmestrahlung und/oder Konvektion bestimmte, Wärmeabgabevermögen des Hitzdrahts nicht überschreitet.

Es ist bevorzugt, dass der Hitzdraht einen Widerstand von weniger als 10 Ohm aufweist, vorzugsweise einen Widerstand von weniger als 1 Ohm, insbesondere einen Widerstand in der Größenordnung von 0,1 Ohm, und der Hitzdraht vorzugsweise aus Platin ausgebildet ist.

Es ist bevorzugt, dass die Zeitdauer zwischen aufeinanderfolgenden Strompulsen ein Vielfaches, vorzugsweise das Zehn- bis Tausendfache, insbesondere etwa das Hundertfache, der Zeitdauer der Strompulse beträgt.

Sensorvorrichtung zur Bestimmung eines Massenstroms eines Gasstroms, insbesondere eines Abgasstroms eines Dieselmotors, umfassend einen ersten Hitzdraht, der so angeordnet ist, dass er in dem Massenstrom platzierbar ist, eine Regel- oder Steuereinheit, welche ausgebildet ist, den ersten Hitzdraht auf eine bestimmte Temperatur oberhalb der Temperatur des Massenstroms zu erhitzen und den Massenstrom über Messung einer Spannung zu ermitteln, die zur Aufrechterhaltung dieser bestimmten Temperatur des ersten Hitzdrahts erforderlich ist, eine Messvorrichtung zum Ermitteln der Temperatur des Gasstroms über eine Messung des Widerstands eines zweiten Hitzdrahts, eine Steuereinheit, die ausgebildet ist, den ersten Hitzdraht auf eine Temperatur zu steuern, die von der Temperatur des Gasstroms abhängig ist, und eine Korrektureinheit, die ausgebildet ist, den aus der Spannung ermittelten Massenstrom um einen von der aus dem Widerstand des zweiten Hitzdrahts ermittelten Temperatur abhängigen Wert zu korrigieren, **dadurch gekennzeichnet, dass** die Messvorrichtung zum Ermitteln der Temperatur eine Sensorvorrichtung nach einer der vorhergehenden Ausführungsformen ist.

Verwendung einer Sensorvorrichtung nach einer der vorhergehenden Ausführungsformen in einer weiteren Sensorvorrichtung zur Bestimmung eines Massenstroms eines Gasstroms, insbesondere eines Abgasstroms eines Dieselmotors, umfassend einen ersten Hitzdraht, der so angeordnet ist, dass er in dem Massenstrom platzierbar ist, eine Regel- oder Steuereinheit, welche ausgebildet ist, den ersten Hitzdraht auf eine bestimmte Temperatur oberhalb der Temperatur des Massenstroms zu erhitzen und den Massenstrom über Messung einer Spannung zu ermitteln, die zur Aufrechterhaltung dieser bestimmten Temperatur des ersten Hitzdrahts erforderlich ist, eine Messvorrichtung zum Ermitteln der Temperatur des Gasstroms über eine Messung des Widerstands eines zweiten Hitzdrahts, eine Steuereinheit, die ausgebildet ist, den ersten Hitzdraht auf eine Temperatur zu steuern, die von der Temperatur des Gasstroms abhängig ist, und eine Korrektureinheit, die ausgebildet ist, den aus der Spannung ermittelten Massenstrom um einen von der aus dem Widerstand des zweiten Hitzdrahts ermittelten Temperatur abhängigen Wert zu korrigieren.

Verfahren zur Bestimmung von in einem Gasstrom enthaltenen elektrisch leitenden und/oder elektrisch geladenen Partikeln, insbesondere Rußpartikeln im Abgasstrom eines Dieselmotors, umfassend den Schritt: Bereitstellen von zumindest einer sich in einer Längsrichtung erstreckenden ersten und einer zweiten Elektrodeneinheit, wobei vorzugsweise zumindest die erste Elektrodeneinheit (100) in dem Gasstrom angeordnet werden kann, gekennzeichnet durch den Schritt: Erfassen der Partikel mittels an zumindest einer der Elektrodeneinheiten, vorzugsweise der ersten Elektrodeneinheit oder beider Elektrodeneinheiten, angeordneten zumindest zwei, vorzugsweise mehreren, diskreten Erfassungsbereichen, die entlang der Erstreckungsrichtung der Elektrodeneinheit voneinander beabstandet sind.

Das Verfahren ist vorzugsweise gekennzeichnet durch den Schritt: Erfassen der Partikel mittels an der ersten Elektrodeneinheit ausgebildeten zumindest zwei, vorzugsweise mehreren Einzelelektroden (101a-l).

Das Verfahren ist vorzugsweise gekennzeichnet durch die Schritte: Generieren eines Messsignals, Bestimmen einer Strömungsgeschwindigkeit der Partikel und/oder einer Größe der Partikel aus dem Messsignal.

Das Verfahren ist vorzugsweise gekennzeichnet durch den Schritt: Bilden des Messsignals als zumindest eine Folge von differenzierten Einzelpulssignalen(111, 112, 113).

Das Verfahren ist vorzugsweise gekennzeichnet durch den Schritt: Generieren der Einzelpulssignale (111, 112, 113) durch Verstärken von Ladungsströmen, die durch zumindest ein, vorzugsweise genau ein, an den Einzelelektroden (101a-l) der ersten Elektrodeneinheit (100) vorbeiströmendes Partikel erzeugt werden.

Das Verfahren ist vorzugsweise gekennzeichnet durch den Schritt: Bestimmen einer Frequenz der Folge von differenzierten Einzelpulssignalen.

Das Verfahren ist vorzugsweise gekennzeichnet durch den Schritt: Bestimmen einer signifikanten Frequenz der Folgen von differenzierten Einzelpulssignalen aus überlagerten Erfassungen einer Vielzahl vorbeiströmender Partikel.

Das Verfahren ist vorzugsweise gekennzeichnet durch den Schritt: Identifizieren des Messsignals zumindest eines Einzelpartikels aus überlagerten Erfassungen einer Vielzahl vorbeiströmender Partikel anhand einer Analyse der dadurch erzeugten Folgen von differenzierten Einzelpulssignalen, vorzugsweise durch Bestimmen einer signifikanten Frequenz der Folgen von differenzierten Einzelpulssignalen.

Das Verfahren ist vorzugsweise gekennzeichnet durch den Schritt: Bestimmen der Strömungsgeschwindigkeit zumindest eines Partikels, vorzugsweise mehrere Partikel, aus einem Abstand zwischen den Einzelelektroden (101a-l) und der Frequenz der Folge/n von differenzierten Einzelpulssignalen.

Das Verfahren ist vorzugsweise gekennzeichnet durch den Schritt: Bestimmen einer Veränderung des Abstands der Partikel von der ersten Elektrodeneinheit quer zur Erstreckungsrichtung der ersten Elektrodeneinheit (100) und/oder einer Änderung der Stärke des Messsignals eines Partikels zwischen zumindest zwei, vorzugsweise mehreren, der Einzelelektroden (101a-l).

Das Verfahren ist vorzugsweise gekennzeichnet durch die Schritte: Bereitstellen der Einzelelektroden in einer ersten und einer zweiten Gruppe von Einzelelektroden (201-208), Auswerten der Signale der ersten Gruppe (201-204) von Einzelelektroden getrennt von den Signalen der zweiten Gruppe (205-208) von Einzelelektroden.

Das Verfahren ist vorzugsweise gekennzeichnet: Bestimmen der Änderung der Stärke des Messsignals eines Partikels zwischen den Einzelelektroden der ersten Gruppe (201-204) und den Einzelelektroden der zweiten Gruppe (205-208).

Das Verfahren ist vorzugsweise gekennzeichnet durch den Schritt: Ableiten eines Maßes für die Veränderung des Abstands der Partikel von der ersten Elektrodeneinheit quer zur Erstreckungsrichtung der ersten Elektrodeneinheit (100, 200) aus der Änderung der Stärke des Messsignals.

Das Verfahren ist vorzugsweise gekennzeichnet durch den Schritt: Ableiten eines Maßes für die Größe der Partikel aus der Veränderung des Abstands der Partikel von der ersten

Elektrodeneinheit quer zur Erstreckungsrichtung der ersten Elektrodeneinheit (100, 200) und/oder der Änderung der Stärke des Messsignals.

Das Verfahren ist vorzugsweise gekennzeichnet durch den Schritt: Ableiten eines Maßes für die Größe der Partikel aus einem mit dem Verhältnis von Oberflächengröße zu Masse der Partikel korrelierenden Signal.

Das Verfahren ist vorzugsweise gekennzeichnet durch den Schritt: Ableiten eines Maßes für eine Fraktalität und/oder eine Volumens und/oder eine Form des Partikels.

Das Verfahren ist vorzugsweise gekennzeichnet durch den Schritt: Vergleichen eines mit dem Verhältnis von Oberflächengröße zu Masse eines Partikels korrelierenden Signals mit einem mit einer Oberflächengröße des Partikels und/oder einer Masse des Partikels korrelierenden Signal.

Das Verfahren ist vorzugsweise gekennzeichnet durch den Schritt: Ableiten eines Maßes für die Oberflächengröße des Partikels und/oder der Masse des Partikels aus der Stärke des Messsignals.

Das Verfahren ist vorzugsweise gekennzeichnet durch den Schritt: Einbetten zumindest einer der Elektrodeneinheiten (301, 302, 401, 402, 501, 502, 601, 602, 701, 702, 801, 802, 901, 902) zumindest abschnittsweise, vorzugsweise im Bereich aller Erfassungsbereiche, in ein elektrisch nichtleitendes Material.

Das Verfahren ist vorzugsweise gekennzeichnet durch den Schritt: Aufheizen der Sensorvorrichtung zumindest abschnittsweise, insbesondere zumindest einer oder beider Elektrodeneinheiten (301, 302, 401, 402, 501, 502, 601, 602, 701, 702, 801, 802, 901, 902) zumindest abschnittsweise, vorzugsweise im Bereich aller Erfassungsbereiche, für die oder während der Messung auf eine Temperatur oberhalb der Temperatur des Gasstroms und vorzugsweise unterhalb einer Zerstörungstemperatur der Partikel.

Verfahren nach einer der vorhergehenden Ausführungsformen oder dem Oberbegriff der ersten Verfahrensausführungsformen, gekennzeichnet durch den Schritt: Detektieren der Partikel durch Erfassen elektromagnetischer Strahlung, die von den Partikeln abgegeben wird, und/oder Erfassen eines durch die Partikel induzierten Stromflusses und/oder Erfassen der Kapazitäten der Partikel.

Verfahren zur Bestimmung der Temperatur eines Gasstroms, insbesondere eines Abgasstroms eines Dieselmotors, umfassend die Schritte: Platzieren eines Hitzdrahts in dem Massenstrom, Ermitteln der Temperatur des Gasstroms durch eine Messung des ohmschen Widerstands des Hitzdrahts, gekennzeichnet durch den Schritt: Ansteuern des Hitzdrahts zur Messung des ohmschen Widerstands mit einem gepulsten Messstrom.

Das Verfahren ist vorzugsweise gekennzeichnet durch den Schritt: Wählen von Stärke und/oder Zeitdauer der Strompulse und die Zeitdauer zwischen aufeinanderfolgenden Strompulsen derart, dass die Erwärmung des Hitzdrahts einen vorgegebenen Grenzwert von vorzugsweise 0,1 K, und/oder das, insbesondere durch Wärmeleitung und/oder Wärmestrahlung und/oder Konvektion bestimmte, Wärmeabgabevermögen des Hitzdrahts nicht überschreitet.

Das Verfahren ist vorzugsweise gekennzeichnet durch den Schritt: Pulsen des Messstroms derart, dass die Zeitdauer zwischen aufeinanderfolgenden Strompulsen ein Vielfaches, vorzugsweise das Zehn- bis Tausendfache, insbesondere etwa das Hundertfache, der Zeitdauer der Strompulse beträgt.

Verfahren zur Bestimmung eines Massenstroms eines Gasstroms, umfassend die Schritte: Platzieren eines ersten Hitzdrahts in dem Massenstrom, Erhitzen des ersten Hitzdrahts auf eine bestimmte Temperatur oberhalb der Temperatur des Massenstroms und Ermitteln des Massenstroms über Messen einer Spannung, die zur Aufrechterhaltung dieser bestimmten Temperatur des ersten Hitzdrahts erforderlich ist, Ermitteln der Temperatur des Gasstroms über Bestimmen des Widerstands eines zweiten Hitzdrahts, Steuern des ersten Hitzdrahts auf eine Temperatur, die von ermittelten Temperatur des Gasstroms abhängig ist, und Korrigieren des aus der gemessenen Spannung ermittelten Massenstroms um einen von der aus dem gemessenen Widerstand des Hitzdrahts ermittelten Temperatur des Gasstroms abhängigen Wert, **dadurch gekennzeichnet, dass** die Temperatur des Gasstroms nach einem Verfahren nach einer der vorhergehenden Ausführungsformen ermittelt wird.

**Patentansprüche**

1. Sensorvorrichtung zur Detektion von in einem Gasstrom enthaltenen elektrisch leitenden und/oder elektrisch geladenen Partikeln, Insbesondere Rußpartikeln Im Abgasstrom eines Dieselmotors, umfassend zumindest eine sich in einer Längsrichtung erstreckende erste und eine zweite Elektrodeneinheit und einen Messverstärker, wobei die erste Elektrodeneinheit (100) als Messelektrode ausgebildet ist und in dem Gasstrom angeordnet ist, und die erste Elektrodeneinheit für ein sich in Erstreckungsrichtung entlang der Elektrodeneinheit bewegendes Partikel zumindest zwei diskrete Erfassungsbereiche zum Erfassen eines Partikels aufweist, die entlang der Erstreckungsrichtung der Elektrodeneinheit voneinander beabstandet sind, **dadurch gekennzeichnet, dass** die erste Elektrodeneinheit (100) einen Ausgang zu dem Messverstärker aufweist, wobei im Eingangsbereich des Messverstärkers galvanisch getrennte Wechselströme gefiltert werden.

2. Sensorvorrichtung nach dem vorhergehenden Anspruch, **dadurch gekennzeichnet, dass** die erste Elektrodenelnheit (100) als gitterförmige Messelektrode mit mehreren Messdrähten ausgebildet ist.

3. Sensorvorrichtung nach einem der beiden vorhergehenden Ansprüche, **dadurch gekennzeichnet, dass** die erste Elektrodeneinheit derart ausgebildet angeordnet ist, dass sie durch direkte Bestromung mit einer hochfrequenten Wechselspannung erhitzt werden kann.

4. Sensorvorrichtung nach einem der vorhergehenden Ansprüche, **dadurch gekennzeichnet, dass** die erste Elektrodeneinheit (100) zumindest zwei, vorzugsweise mehrere, Einzelelektroden (101a-I) aufweist.

5. Sensorvorrichtung nach einem der vorhergehenden Ansprüche, **gekennzeichnet durch** eine Messeinheit, die elektrisch mit den zumindest zwei Elektrodeneinheiten gekoppelt und ausgebildet ist, ein Messsignal zu generieren, und eine Auswerteeinheit, die ausgebildet ist, aus dem Messsignal eine Strömungsgeschwindigkeit der Partikel und/oder eine Größe der Partikel zu bestimmen, wobei die Messeinheit vorzugsweise ausgebildet ist, um das Messsignal als zumindest eine Folge von differenzierten Einzelpulssignalen (111, 112, 113) zu bilden und weiterhin vorzugsweise ausgebildet ist, um die Einzelpulssignale (111, 112, 113) aus Ladungsströmen zu bilden, die **durch** zumindest ein, vorzugsweise genau ein, an den Einzelelektroden (101a-I) der ersten Elektrodeneinheit (100) vorbeiströmendes Partikel erzeugt werden.

6. Sensorvorrichtung nach dem vorhergehenden Anspruch, **dadurch gekennzeichnet, dass** die Auswerteeinheit ausgebildet ist, um eine Frequenz der Folge von differenzierten Einzelpulssignalen zu bestimmen, und vorzugsweise ausgebildet ist, um aus überlagerten Erfassungen einer Vielzahl vorbeiströmender Partikel eine signifikante Frequenz der Folgen von differenzierten Einzelpulssignalen zu bestimmen, und weiterhin vorzugsweise ausgebildet ist, um aus überlagerten Erfassungen einer Vielzahl vorbeiströmender Partikel anhand einer Analyse der dadurch erzeugten Folgen von differenzierten Einzelpulssignalen das Messsignal zumindest eines Einzelpartikels zu identifizieren, insbesondere indem eine signifikante Frequenz der Folgen von differenzierten Einzelpulssignalen bestimmt wird.

7. Sensorvorrichtung nach einem der beiden vorhergehenden Ansprüche, **dadurch gekennzeichnet, dass** die Auswerteeinheit ausgebildet ist, um eine Veränderung des Abstands der Partikel von der ersten Elektrodeneinheit quer zur Erstreckungsrichtung der ersten Elektrodeneinheit (100) und/oder eine Änderung der Stärke des Messsignals eines Partikels zwischen zumindest zwei, vorzugsweise mehreren, der Einzelelektroden (101a-I) zu bestimmen.

8. Sensorvorrichtung nach einem der vorhergehenden Ansprüche 4 bis 7, **dadurch gekennzeichnet, dass** die Einzelelektroden (201-208) eine erste und eine zweite Gruppe von Einzelelektroden umfassen und die Auswerteeinheit ausgebildet ist, die Signale der ersten Gruppe (201-204) von Einzelelektroden getrennt von den Signalen der zweiten Gruppe (205-208) von Einzelelektroden auszuwerten, wobei vorzugsweise die Auswerteeinheit weiterhin ausgebildet ist, um die Änderung der Stärke des Messsignals eines Partikels zwischen den Einzelelektroden der ersten Gruppe (201-204) und den Einzelelektroden der zweiten Gruppe (205-208) zu bestimmen.

9. Sensorvorrichtung nach einem der vorhergehenden Ansprüche,
**gekennzeichnet durch** eine Erwärmungsvorrichtung zum Erhitzen der Partikel und/oder der ersten und/oder der zweiten Elektrodeneinheit, wobei die Erwärmungsvorrichtung vorzugsweise eine Quelle von Infrarotlicht, Laserlicht, Mikrowellen, elektrischen Wechsetfeldern und/oder magnetischen Wechselfeldern aufweist.

10. Sensorvorrichtung nach einem der vorhergehenden Ansprüche,
**gekennzeichnet durch**

   - eine Wechselstromquelle zum Überlagern eines Hochspannungsgleichstroms mit Wechselstrom, vorzugsweise mit einem Wechselstrom mit rechteckförmiger Amplitude, und/oder
   - eine Schallquelle zur Beschallung der ersten und/oder der zweiten Elektrodeneinheit mit einem Schall von hoher Intensität, insbesondere einem Schall mit periodischer Änderung der Frequenz.

11. Verfahren zur Bestimmung von in einem Gasstrom enthaltenen elektrisch leitenden und/oder elektrisch geladenen Partikeln, insbesondere Rußpartikeln im Abgasstrom eines Dieselmotors, umfassend die Schritte:

   - Bereitstellen von zumindest einer sich in einer Längsrichtung erstreckenden ersten und einer zweiten Elektrodeneinheit und einem Messverstärker, wobei die erste Elektrodeneinheit (100) als Messelektrode ausgebildet ist und in dem Gasstrom angeordnet ist,
   - Erfassen der Partikel mittels an der ersten Elektrodeneinheit angeordneten zumindest zwei diskreten Erfassungsbereichen, die entlang der Erstreckungsrichtung der Elektrodeneinheit voneinander beabstandet sind,

   **gekennzeichnet durch** den Schritt:

   - Filtern galvanisch getrennter Wechselströme im Eingangsbereich des Messverstärkers, zu dem die erste Elektrodeneinheit (100) einen Ausgang aufweist.

12. Verfahren nach dem vorhergehenden Anspruch,

   - Erfassen der Partikel mittels an der ersten Elektrodeneinheit ausgebildeten zumindest zwei, vorzugsweise mehreren Einzelelektroden (101a-I).

13. Verfahren nach einem der beiden vorhergehenden Ansprüche,
**gekennzeichnet durch** die Schritte:

   - Generieren eines Messsignals.
   - Bestimmen einer Strömungsgeschwindigkeit der Partikel und/oder einer Größe der Partikel aus dem Messsignal,

   vorzugsweise weiterhin **gekennzeichnet durch** den Schritt:

   - Bilden des Messsignals als zumindest eine Folge von differenzierten Einzelpulssignalen(111, 112, 113),

   und vorzugsweise weiterhin **gekennzeichnet durch** den Schritt:

   - Generieren der Einzelpulssignale (111, 112, 113) **durch** Verstärken von Ladungsströmen, die **durch** zumindest ein, vorzugsweise genau ein, an den Einzelelektroden (101a-I) der ersten Elektrodeneinheit (100) vorbeiströmendes Partikel erzeugt werden.

   und vorzugsweise weiterhin **gekennzeichnet durch** den Schritt:

   - Bestimmen einer Frequenz der Folge von differenzierten Einzelpulssignalen.

**14.** Verfahren nach dem vorhergehenden Anspruch, **gekennzeichnet durch** den Schritt:

- Bestimmen einer Veränderung des Abstands der Partikel von der ersten Elektrodeneinheit quer zur Erstrekkungsrichtung der ersten Elektrodeneinheit (100) und/oder einer Änderung der Stärke des Messsignals eines Partikels zwischen zumindest zwei, vorzugsweise mehreren, der Einzelelektroden (101a-I).

**15.** Verfahren nach einem der vorhergehenden Ansprüche 12 bis 14, **gekennzeichnet durch** die Schritte:

- Bereitstellen der Einzelelektroden in einer ersten und einer zweiten Gruppe von Einzelelektroden (201-208),
- Auswerten der Signale der ersten Gruppe (201-204) von Einzelelektroden getrennt von den Signalen der zweiten Gruppe (205-208) von Einzelelektroden,

und vorzugsweise weiterhin **gekennzeichnet durch** den Schritt:

- Bestimmen der Änderung der Stärke des Messsignals eines Partikels zwischen den Einzelelektroden der ersten Gruppe (201-204) und den Einzetelektroden der zweiten Gruppe (205-208).

## Claims

**1.** Sensor device for detecting electrically conducting and/or electrically charged particles contained in a gas flow, in particular soot particles in the exhaust gas flow of a diesel engine, comprising at least a first and a second electrode unit extending in a longitudinal direction and a measuring amplifier, the first electrode unit (100) being provided in the form of a measuring electrode and disposed in a gas flow, and
the first electrode unit has two discrete detection areas for detecting a particle, spaced apart from one another along the direction of extension of the electrode unit for a particle moving in the direction of extension along the electrode unit, **characterised in that** the first electrode unit (100) has an output to the measuring amplifier and galvanically separated alternating currents are filtered in the input area of the measuring amplifier.

**2.** Sensor device as claimed in the preceding claim, **characterised in that** the first electrode unit (100) is provided in the form of a lattice-shaped measuring electrode with several measuring wires.

**3.** Sensor device as claimed in one of the two preceding claims, **characterised in that** the first electrode unit is disposed in such a way that it can be heated by applying power directly with a high-frequency alternating voltage.

**4.** Sensor device as claimed in one of the preceding claims, **characterised in that** the first electrode unit (100) has at least two, preferably several, individual electrodes (101a-1).

**5.** Sensor device as claimed in one of the preceding claims, **characterised by** a measuring unit electrically coupled with the at least two electrode units and configured to generate a measurement signal, and an evaluation unit configured to determine a flow speed of the particles and/or a size of the particles from the measurement signal, and the measuring unit is preferably configured to form the measurement signal as at least one sequence of differentiated individual pulse signals (111, 112, 113) and preferably also configured to form the individual pulse signals (111, 112, 113) from charge currents which are generated by at least one, preferably exactly one, particle flowing past the individual electrodes (101a-1) of the first electrode unit (100).

**6.** Sensor device as claimed in the preceding claim, **characterised in that** the evaluation unit is configured to determine a frequency of the sequence of differentiated individual pulse signals, and preferably configured to determine a significant frequency of the sequences of differentiated individual pulse signals from superimposed detections of a plurality of particles flowing past, and is preferably also configured to identify the measurement signal of at least one individual particle from superimposed detections of a plurality of particles flowing past by analysing the sequence of differentiated individual pulse signals generated thereby, in particular so that a significant frequency of the sequences of differentiated individual pulse signals is determined.

**7.** Sensor device as claimed in one of the two preceding claims, **characterised in that** the evaluation unit is configured to determine a change in the distance of the particles from the first electrode unit transversely to the direction of extension of the first electrode unit (100) and/or a change in the intensity of the measurement signal of a particle between at least two, preferably several, of the individual electrodes (101a-1).

8. Sensor device as claimed in one of preceding claims 4 to 7, **characterised in that** the individual electrodes (201-208) comprise a first and a second group of individual electrodes and the evaluation unit is configured to evaluate the signals of the first group (201-204) of individual electrodes separately from the signals of the second group (205-208) of individual electrodes, and the evaluation unit is preferably also configured to determine the change in intensity of the measurement signal of a particle between the individual electrodes of the first group (201-204) and the individual electrodes of the second group (205-208).

9. Sensor device as claimed in one of the preceding claims, **characterised by** a heating device for heating the particles and/or the first and/or second electrode unit, which heating device preferably has a source of infra-red light, laser light, microwaves, electric alternating fields and/or magnetic alternating fields.

10. Sensor device as claimed in one of the preceding claims, **characterised by**

   - an alternating current source for superimposing a high-voltage direct current with alternating current, preferably with an alternating current with rectangular amplitude, and/or
   - an acoustic source for exposing the first and/or second electrode unit to a sound of high intensity, in particular a sound with a periodic change in frequency.

11. Method of detecting electrically conducting and/or electrically charged particles in a gas flow, in particular soot particles in the exhaust gas flow of a diesel engine, comprising the steps of:

   - providing at least a first and a second electrode unit extending in a longitudinal direction and a measuring amplifier, the first electrode unit (100) being provided in the form of a measuring electrode and disposed in the gas flow,
   - detecting the particles by means of at least two discrete detection areas disposed on the first electrode unit at a distance apart from one another along the direction of extension of the electrode unit,

   **characterised by** the step of:

   - filtering galvanically separated alternating currents in the input area of the measuring amplifier to which the first electrode unit (100) has an output.

12. Method as claimed in the preceding claim, [**characterised by** the step of:]

   - detecting the particles by means of the at least two, preferably several, individual electrodes (101a-1) disposed on the first electrode unit.

13. Method as claimed in one of the two preceding claims, **characterised by** the steps of:

   - generating a measurement signal,
   - determining a flow speed of the particles and/or a size of the particles from the measurement signal,

   preferably further **characterised by** the step of:

   - forming the measurement signal as at least one sequence of differentiated individual pulse signals (111, 112, 113),

   and preferably further **characterised by** the step of:

   - generating the individual pulse signals (111, 112, 113) by amplifying charge currents generated by at least one, preferably exactly one, particle flowing past the individual electrodes (101a-1) of the first electrode unit (100),

   and preferably further **characterised by** the step of:

   - determining a frequency of the sequence of differentiated individual pulse signals.

14. Method as claimed in the preceding claim, **characterised by** the step of:

- determining a change in the distance of the particles from the first electrode unit transversely to the direction of extension of the first electrode unit (100) and/or a change in the intensity of the measurement signal of a particle between at least two, preferably several, of the individual electrodes (101a-1).

15. Method as claimed in one of preceding claims 12 to 14, **characterised by** the steps of:

- disposing the individual electrodes in a first and a second group of individual electrodes (201-208),
- devaluating the signals of the first group (201-204) of individual electrodes separately from the signals of the second group (205-208) of individual electrodes,

and preferably further **characterised by** the step of:

- determining the change in intensity of the measurement signal of a particle between the individual electrodes of the first group (201-204) and the individual electrodes of the second group (205-208).

**Revendications**

1. Dispositif de détection servant à détecter des particules électriquement conductrices contenues dans un flux de gaz et/ou des particules électriquement chargées, en particulier des particules de suie dans un flux de gaz d'échappement d'un moteur diesel, comprenant au moins une première unité d'électrodes s'étendant dans la direction longitudinale et une deuxième unité d'électrodes et un amplificateur de mesure, sachant que la première unité d'électrodes (100) est réalisée sous la forme d'une électrode de mesure et est disposée dans le flux de gaz, et la première unité d'électrodes comporte pour une particule se déplaçant dans la direction de l'extension le long de l'unité d'électrodes au moins deux zones de captage discrètes servant à capter une particule, lesquelles zones de captage sont espacées les unes des autres le long de la direction d'extension de l'unité d'électrodes, **caractérisé en ce que** la première unité d'électrodes (100) comporte une sortie en direction de l'amplificateur de mesure, sachant que dans la zone d'entrée de l'amplificateur de mesure sont filtrés des courants alternatifs avec séparation galvanique.

2. Dispositif de détection selon la revendication précédente, **caractérisé en ce que** la première unité d'électrodes (100) est réalisée sous la forme d'une électrode de mesure présentant une forme de grille et dotée de plusieurs fils de mesure.

3. Dispositif de détection selon l'une quelconque des deux revendications précédentes, **caractérisé en ce que** la première unité d'électrodes est agencée réalisée de telle manière qu'elle peut être réchauffée grâce à une alimentation directe en tension alternative haute fréquence.

4. Dispositif de détection selon l'une quelconque des revendications précédentes, **caractérisé en ce que** la première unité d'électrodes (100) présente au moins deux, de préférence plusieurs, électrodes individuelles (101 a-1).

5. Dispositif de détection selon l'une quelconque des revendications précédentes, **caractérisé par** une unité de mesure, qui est réalisée et couplée électriquement aux au moins deux unités d'électrodes afin de générer un signal de mesure, et une unité d'évaluation, qui est réalisée pour déterminer à partir du signal de mesure une vitesse d'écoulement des particules et/ou une taille des particules, sachant que l'unité de mesure est réalisée de préférence pour former le signal de mesure comme au moins une succession de signaux d'impulsions individuels (111, 112, 113) différenciés, et sachant qu'elle est en outre réalisée de préférence pour former les signaux d'impulsions individuels (111, 112, 113) à partir des flux de charge générés par au moins une particule, de préférence précisément une particule, s'écoulant le long des électrodes individuelles (101 a-1) de la première unité d'électrodes (100).

6. Dispositif de détection selon la revendication précédente, **caractérisé en ce que** l'unité d'évaluation est réalisée pour déterminer une fréquence de succession de signaux d'impulsions individuels différenciés, et **en ce qu'**elle est réalisée de préférence pour déterminer à partir des détections accumulées d'une pluralité de particules s'écoulant une fréquence significative des successions de signaux d'impulsions individuels différenciés, et **en ce qu'**elle est en outre réalisée de préférence pour identifier à partir des détections accumulées d'une pluralité de particules s'écoulant, à l'aide d'une analyse des successions en résultant des signaux d'impulsions individuels différenciés, le signal de mesure d'au moins une particule individuelle, en particulier **en ce qu'**on détermine une fréquence significative des successions de signaux d'impulsions individuels différenciés.

7. Dispositif de détection selon l'une quelconque des deux revendications précédentes,
   **caractérisé en ce que** l'unité d'évaluation est réalisée pour déterminer une modification de la distance des particules par rapport à la première unité d'électrodes de manière transversale par rapport à la direction d'extension de la première unité d'électrodes (100) et/ou une variation de l'intensité du signal de mesure d'une particule entre au moins deux, de préférence plusieurs, électrodes individuelles parmi les électrodes individuelles (101 a-1).

8. Dispositif de détection selon l'une quelconque des revendications précédentes 4 à 7,
   **caractérisé en ce que** les électrodes individuelles (201-208) comprennent un premier groupe d'électrodes individuelles et un deuxième groupe d'électrodes individuelles, et **en ce que** l'unité d'évaluation est réalisée pour évaluer les signaux du premier groupe (201-204) d'électrodes individuelles séparément des signaux du deuxième groupe (205-208) d'électrodes individuelles, sachant que de préférence l'unité d'évaluation est réalisée en outre pour déterminer la variation de l'intensité du signal de mesure d'une particule entre les électrodes individuelles du premier groupe (201-204) et les électrodes individuelles du deuxième groupe (205-208).

9. Dispositif de détection selon l'une quelconque des revendications précédentes,
   **caractérisé par** un dispositif de réchauffement servant à réchauffer les particules et/ou la première et/ou la deuxième unité d'électrodes, sachant que le dispositif de réchauffement présente de préférence une source de lumière infrarouge, de lumière laser, de micro-ondes, de champs alternatifs électriques et/ou de champs alternatifs magnétiques.

10. Dispositif de détection selon l'une quelconque des revendications précédentes,
    **caractérisé par**

    - une source de courant alternatif servant à superposer un courant continu haute tension à un courant alternatif, de préférence à un courant alternatif présentant une amplitude rectangulaire, et/ou
    - une source sonore servant à exposer la première et/ou la deuxième unité d'électrodes à un bruit de haute intensité, en particulier à un bruit présentant une variation périodique de fréquence.

11. Procédé servant à déterminer des particules électriquement conductrices contenues dans un flux de gaz et/ou des particules électriquement chargées, en particulier des particules de suie dans le flux de gaz d'échappement d'un moteur diesel, comprenant les étapes suivantes consistant à :

    - fournir au moins une première unité d'électrodes s'étendant dans une direction longitudinale et une deuxième unité d'électrodes et un amplificateur de mesure, sachant que la première unité d'électrodes (100) est réalisée sous la forme d'une électrode de mesure et est disposée dans le flux de gaz,
    - détecter les particules au moyen d'au, moins deux zones de détection discrètes disposées au niveau de la première unité d'électrodes, lesquelles zones de détection sont espacées les unes des autres le long de la direction d'extension de l'unité d'électrodes,

    **caractérisé par** l'étape consistant à :

    - filtrer des courants alternatifs avec séparation galvanique dans la zone d'entrée de l'amplificateur de mesure, en direction de laquelle la première unité d'électrodes (100) présente une sortie.

12. Procédé selon la revendication précédente,
    **caractérisé par** l'étape consistant à :

    - détecter les particules au moyen d'au moins deux, de préférence plusieurs, électrodes individuelles (101 a-1) réalisées au niveau de la première unité d'électrodes.

13. Procédé selon l'une quelconque des deux revendications précédentes, **caractérisé par** les étapes consistant à :

    - générer un signal de mesure,

- déterminer une vitesse d'écoulement des particules et/ou une taille des particules à partir du signal de mesure,

de préférence **caractérisé en outre par** l'étape consistant à :

- former le signal de mesure en tant qu'au moins une succession de signaux d'impulsions individuels (111, 112, 113) différenciés,

et de préférence **caractérisé en outre par** l'étape consistant à :

- générer les signaux d'impulsions individuels (111, 112, 113) en amplifiant les courants de charge, qui sont générés par au moins une particule, de préférence précisément une particule, s'écoulant le long des électrodes individuelles (101 a-1) de la première unité d'électrodes (100),

et de préférence **caractérisé en outre par** l'étape consistant à :

- déterminer une fréquence de la succession de signaux d'impulsions individuels différenciés.

14. Procédé selon la revendication précédente,
**caractérisé par** l'étape consistant à :

- déterminer une modification de la distance des particules par rapport à la première unité d'électrodes de manière transversale par rapport à la direction d'extension de la première unité d'électrodes (100) et/ou une variation de l'intensité du signal de mesure d'une particule entre au moins deux, de préférence plusieurs, électrodes individuelles parmi les électrodes individuelles (101 a-1).

15. Procédé selon l'une quelconque des revendications précédentes 12 à 14, **caractérisé par** les étapes consistant à :

- fournir les électrodes individuelles dans un premier et un deuxième groupe d'électrodes individuelles (201-208),
- évaluer les signaux du premier groupe (201-204) d'électrodes individuelles séparément des signaux du deuxième groupe (205-208) d'électrodes individuelles, et de préférence **caractérisé en outre par** l'étape consistant à :

- déterminer la variation de l'intensité du signal de mesure d'une particule entre les électrodes individuelles du premier groupe (201-204) et les électrodes individuelles du deuxième groupe (205-208).

Fig. 1

Fig. 2

Fig. 3

Fig. 4

## Fig. 5

## Fig. 6

Fig. 7

Fig. 8

Fig. 9

Fig. 10

## Fig. 11

## Fig. 12

Fig. 13

a

A →

v →

A →

301

A - A

b

302

303

Fig. 14

a

401

v →

b

405    406    402

404

403

Fig. 15

a

A →

501

A - A

b

V

A →

502

Fig. 16

a

A →

601

A - A

b

V →

602

A →

Fig. 17

a                                                701                          b

A→                                                          A - A

→
v

702

Fig. 18

a                                                801                          b

A→                                                          A - A

v
→

802

## Fig. 19

## Fig. 20

A - A

## Fig. 21

## Fig. 22

## Fig. 23

Fig. 24

Fig. 25

Fig. 26

1540

1510a   1522a   1530a

1521 a

1521 b

1510 b   1522b   1530b

1500

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19536705 A1
- DE 19817402 C1
- DE 102004039647 A1
- DE 102005016395 A1
- DE 19651611 A1
- DE 102004010661 B4
- DE 10242301 A1
- DE 102004007038 A1
- US 7275415 B2
- DE 202005008774 U1
- DE 102005039915 A1